(19) Europäisches Patentamt / European Patent Office / Office européen des brevets

(11) **EP 4 723 705 A1**

(12) **EUROPEAN PATENT APPLICATION**
published in accordance with Art. 153(4) EPC

(43) Date of publication:
08.04.2026 Bulletin 2026/15

(51) International Patent Classification (IPC):
*H04W 12/041* (2021.01)    *H04W 12/0431* (2021.01)
*H04W 12/60* (2021.01)    *H04W 12/40* (2021.01)

(21) Application number: 23941033.5

(52) Cooperative Patent Classification (CPC):
H04W 12/0431; H04W 12/60; H04W 12/041;
H04W 12/40

(22) Date of filing: 14.06.2023

(86) International application number:
PCT/CN2023/100301

(87) International publication number:
WO 2024/254796 (19.12.2024 Gazette 2024/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Huawei Technologies Co., Ltd.
Shenzhen, Guangdong 518129 (CN)

(72) Inventors:
• XING, Weijun
Shenzhen, Guangdong 518129 (CN)
• WANG, Jun
Shenzhen, Guangdong 518129 (CN)
• WANG, Wenhui
Shenzhen, Guangdong 518129 (CN)
• XI, Yan
Shenzhen, Guangdong 518129 (CN)
• WU, Shaoyun
Shenzhen, Guangdong 518129 (CN)
• YAO, Qi
Shenzhen, Guangdong 518129 (CN)
• XUE, Yifei
Shenzhen, Guangdong 518129 (CN)

(74) Representative: Maiwald GmbH
Elisenhof
Elisenstraße 3
80335 München (DE)

(54) **SECURITY KEY DETERMINATION METHOD AND APPARATUS**

(57) This application pertains to the field of communication technologies, and provides a security key determining method and apparatus, to resolve a problem that a future communication requirement cannot be met only by ensuring communication security between a terminal and an AMF. In the method, a terminal may directly communicate with a first network function in a network, and after the first network function receives a first request initiated by the terminal, a security connection may be established between the first network function and the terminal by determining a security key. In other words, a message between the first network function and the terminal may be protected by using the security key. In this way, when the terminal directly communicates with each network function, security protection can be implemented between the terminal and each network function, thereby ensuring communication security and meeting a future communication requirement.

FIG. 6

**Description**

**TECHNICAL FIELD**

This application relates to the communication field, and in particular, to a security key determining method and apparatus.

**BACKGROUND**

In an existing network architecture, all control plane messages between a terminal and other network functions (network function, NF) than an access and mobility management function (access and mobility management function, AMF) in a core network (core network, CN) are forwarded by the AMF. In other words, security protection between the terminal and the other NFs is implemented by using the AMF. In other words, security protection between the terminal and all NFs in the CN depends merely on security protection between the terminal and the AMF. For example, encryption protection may be performed on a non-access stratum (non-access stratum, NAS) message between the terminal and the AMF by using a key.

However, a future communication requirement cannot be met only by ensuring communication security between the terminal and the AMF.

**SUMMARY**

Embodiments of this application provide a security key determining method and apparatus, to resolve the foregoing technical problem.

To achieve the foregoing objective, this application uses the following technical solutions.

According to a first aspect, a security key determining method is provided. The method is performed by a first network function. The method includes: The first network function receives a first request; obtains a first key of the first network function based on the first request; and determines a security key based on the first key. The first request is used by a terminal to request establishment of a service with the first network function, or the first request is used by the terminal to request access to a network. The first network function is a network function other than the second network function in the network. The second network function is used for access management of the terminal. The security key is used for establishing a security connection between the terminal and the first network function.

It can be learned from the method in the first aspect that communication between the terminal and each network function (including both an AMF and another network function) also needs to be ensured in a future communication requirement. On this basis, the terminal may directly communicate with the first network function in the network. In this case, after the first network function receives the first request initiated by the terminal, the security connection may be established between the first network function and the terminal by determining the security key. In other words, a message between the first network function and the terminal may be protected by using the security key. In this way, when the terminal directly communicates with each network function, security protection can be implemented between the terminal and each network function, thereby ensuring communication security and meeting a future communication requirement.

In a possible design solution, the first network function obtaining the first key of the first network function based on the first request includes that the first network function sends a second request to a third network function based on the first request; and receives a first response from the third network function. The third network function is configured to determine a key of the first network function. The second request is used to request the third network function to derive the key of the first network function. The first response carries the first key. The first response is a response message for the second request. In this way, the first network function can obtain the first key from the third network function, and the first network function does not need to automatically derive the first key, thereby reducing processing overheads of the first network function.

In a possible design solution, the first network function obtaining the first key of the first network function based on the first request includes that the first network function obtains a second key based on the first request; and determines the first key based on the second key. The second key is a key of the third network function. The key of the third network function is used for determining the key of the first network function. In this way, the first network function can automatically derive the first key, and does not need to request to obtain the first key from the another network function, to reduce communication overheads of the first network function and reduce transmission of the first key in the network, thereby improving security of the first key.

Optionally, the third network function is any one of the following: an access and mobility management function AMF, access management AM, and a security anchor function SEAF. In this way, an existing network function such as an SEAF may be used for key derivation; or the first key may be derived from an access management function (for example, the AMF or the AM), to simplify a processing procedure. Access management and key derivation can be processed in a unified manner, to reduce system complexity.

Optionally, the first network function determining the first key based on the second key includes that the first network function determines the first key based on the second key and first information, where the first information is at least one of the following: information about the terminal, information about the first request, information about the first network function, an identifier of the network, and a security parameter of the network. In this way, security of the first key can be improved based on the first information, to further ensure communication security between the terminal and the first network function. In addition, uniqueness of the derived first key can be ensured further based on the first information.

Further, the second key is carried in the first request, or the second key is pre-configured locally in the first network function. In other words, when the third network function and the second network function are a same network function, the second network function may send, to the first network function, the first request carrying the second key, so that the first network function can obtain the second key from the first request when receiving the first request. In other words, the first network function does not need to request the second key from the another network function, thereby reducing communication overheads of the first network function. In addition, the second key is pre-configured locally on the first network function, to facilitate obtaining the second key by the first network function. In other words, the first network function does not need to request the second key from the another network function, thereby reducing communication overheads of the first network function.

In a possible design solution, the first network function determining the security key based on the first key includes that the first network function determines the security key based on the first key and second information, where the second information is at least one of the following: information about the terminal, information about the first request, information about the first network function, an identifier of the network, and a security parameter of the network. In this way, security of the security key can be improved based on the second information, to further ensure communication security between the terminal and the first network function. In addition, uniqueness of the derived security key can be ensured further based on the second information.

In a possible design solution, the first network function determining the security key based on the first key includes that the first network function determines a third key of the first network function based on the first key and the information about the first request; and determines the security key based on the third key. In other words, the first network function may determine, based on the information about the first request, the third key corresponding to a current service status of the terminal. To be specific, for each service between the first network function and the terminal, the first network function may derive the security key corresponding to the service, to ensure communication security of each service between the first network function and the terminal and further ensure communication security between the terminal and the first network function.

Optionally, the first network function determining the security key based on the third key includes that the first network function determines the security key based on the third key and second information, where the second information is at least one of the following: information about the terminal, information about the first request, information about the first network function, an identifier of the network, and a security parameter of the network. In this way, security of the security key can be improved based on the second information, to further ensure communication security between the terminal and the first network function. In addition, uniqueness of the derived security key can be ensured further based on the second information.

In a possible design solution, the method according to the first aspect further includes: The first network function sends a first message to the terminal, where the first message includes information indicating the key of the first network function. In this way, the terminal can be instructed to start to derive a key, so that the terminal starts to obtain the security key used for establishing the security connection between the terminal and the first network function, thereby ensuring that the security connection is successfully established between the terminal and the first network function.

Optionally, the first message further includes information indicating an encryption algorithm, and the encryption algorithm is an algorithm used by the terminal for encryption. In this way, after obtaining the key of the first network function, the terminal can determine, based on the encryption algorithm, the security key corresponding to a security key of the first network function, thereby ensuring that the security connection is successfully established between the terminal and the first network function.

Optionally, the method according to the first aspect further includes: The first network function receives a second message from the terminal, where the second message indicates whether the terminal determines the security key. In this way, after receiving the second message, the first network function can determine a subsequent operation based on content indicated by the second message.

In a possible design solution, the second network function is an AMF or AM. In other words, an existing AMF may be upgraded, and an upgraded AMF is configured to perform access management of the terminal. Alternatively, AM may be set to perform access management, to manage a plurality of entities in a distributed network.

Optionally, when the second network function is an AMF, the first network function is at least one of the following: a session management function SMF, a policy control function PCF, a location management function LMF, a network data analytics function NWDAF, and a short message service function SMSF. In other words, an existing SMF, an existing PCF, an existing LMF, an existing NWDAF, and an existing SMSF may be upgraded, so that each upgraded network function directly communicates with the terminal, to avoid forwarding a message between each network function and the terminal by using the AMF, thereby improving a communication rate.

Optionally, when the second network function is AM, the first network function is at least one of the following: mobility management MM, proxy, and load balance LB. In other words, in the distributed network, the MM, the proxy, or the LB may be set to forward a message between the terminal and each network function in the network corresponding to the first network function.

According to a second aspect, a security key determining method is provided. The method is performed by a second network function. The method includes: The second network function receives a first request; obtains a first key of a first network function based on the first request; and sends the first key to the first network function. The second network function is used for access management of a terminal. The first request is used by the terminal to request establishment of a service with the first network function, or the first request is used by the terminal to request access to a network. The first network function is a network function other than the second network function in the network. The first key is used for determining a security key used for establishing a security connection between the terminal and the first network function.

In a possible design solution, the second network function obtaining the first key of the first network function based on the first request includes that the second network function sends a second request to a third network function based on the first request; and receives a first response from the third network function. The third network function is configured to determine a key of the first network function. The second request is used to request the third network function to derive the key of the first network function. The first response carries the first key. The first response is a response message for the second request. In this way, the second network function can obtain the first key from the third network function, and the second network function does not need to automatically derive the first key, thereby reducing processing overheads of the second network function.

In a possible design solution, the second network function obtaining the first key of the first network function based on the first request includes that the second network function determines the first key based on a key of the second network function. In other words, the second network function can automatically derive the first key, and does not need to request to obtain the first key from another network function, to reduce communication overheads of the second network function and reduce transmission of the first key in the network, thereby improving security of the first key.

Optionally, the second network function determining the first key based on the key of the second network function includes that the second network function determines the first key based on the key of the second network function and first information, where the first information is at least one of the following: information about the terminal, information about the first request, information about the first network function, an identifier of the network, and a security parameter of the network. In this way, security of the first key can be improved based on the first information, to further ensure communication security between the terminal and the first network function. In addition, uniqueness of the derived first key can be ensured further based on the first information.

In a possible design solution, the first request is a service request. The second network function receiving the first request includes that the second network function receives the service request from the terminal. The service request is used to request establishment of a service between the terminal and the first network function. Correspondingly, the second network function sending the first key to the first network function includes that the second network function sends, to the first network function, the service request carrying the first key.

In a possible design solution, the first request is an access request. The second network function receiving the first request includes that the second network function receives the access request from the terminal. The access request is used by the terminal to request access to the network. Correspondingly, the second network function sending the first key to the first network function includes that the second network function sends, to the first network function, the access request carrying the first key.

In a possible design solution, the second network function is an access and mobility management function AMF or access management AM.

Optionally, when the second network function is an AMF, the first network function is at least one of the following: a session management function SMF, a policy control function PCF, a location management function LMF, a network data analytics function NWDAF, and a short message service function SMSF.

Optionally, when the second network function is AM, the first network function is at least one of the following: mobility management MM, proxy, and load balance LB.

In addition, for technical effects of the method according to the second aspect, refer to the technical effects of the method according to the first aspect. Details are not described herein again.

According to a third aspect, a security key determining method is provided. The method is performed by a third network function. The method includes: The third network function receives a second request; obtains a first key of a first network function based on the second request; and sends a first response. The second request is used to request the third network function to derive a key of the first network function. The key of the first network function is used for determining a security key used for establishing a security connection between a terminal and the first network function. The first network function is a network function other than the second network function in a network. The second network function is used for access management of the terminal. The first response carries the first key. The first response is a response message for the second request.

In a possible design solution, the third network function receiving the second request includes that the third network function receives the second request from the second network function. Correspondingly, the third network function sending the first response includes that the third network function sends the first response to the second network function.

In a possible design solution, the third network function receiving the second request includes that the third network function receives the second request from the first network function. Correspondingly, the third network function sending the first response includes that the third network function sends the first response to the first network function.

In a possible design solution, the third network function obtaining the first key of the first network function based on the second request includes that the third network function determines the first key based on the second key. The second key is a key of the third network function. The key of the third network function is used for determining the key of the first network function.

Optionally, the third network function determining the first key based on the second key includes that the third network function determines the first key based on the second key and first information, where the first information is at least one of the following: information about the terminal, information about the first request, information about the first network function, an identifier of the network, and a security parameter of the network. In this way, security of the first key can be improved based on the first information, to further ensure communication security between the terminal and the first network function. In addition, uniqueness of the derived first key can be ensured further based on the first information.

In a possible design solution, the second network function is an access and mobility management function AMF or access management AM.

Optionally, when the second network function is an AMF, the first network function is at least one of the following: a session management function SMF, a policy control function PCF, a location management function LMF, a network data analytics function NWDAF, and a short message service function SMSF.

Optionally, when the second network function is AM, the first network function is at least one of the following: mobility management MM, proxy, and load balance LB.

In addition, for technical effects of the method according to the third aspect, refer to the technical effects of the method according to the first aspect. Details are not described herein again.

According to a fourth aspect, a security key determining method is provided. The method is performed by a terminal. The method includes: The terminal receives a first message from a first network function, and sends a second message to the first network function. The first message includes information indicating a key of the first network function. The first network function is a network function other than a second network function in a network. The second network function is used for access management of the terminal. The second message indicates whether the terminal determines a security key used for establishing a security connection between the terminal and the first network function.

In a possible design solution, the first message further includes information indicating an encryption algorithm. The encryption algorithm is an algorithm used by the terminal for encryption. The method according to the fourth aspect further includes: The terminal determines the security key based on the information about the key of the first network function and the information indicating the encryption algorithm. In this way, the terminal can accurately determine the security key corresponding to a security key of the first network function, to ensure that the security connection is successfully established between the terminal and the first network function.

In a possible design solution, before the terminal receives the first message from the first network function, the method according to the fourth aspect further includes: The terminal sends a first request to the second network function, where the first request is used by the terminal to request establishment of a service with the first network function, or the first request is used by the terminal to request access to the network. In other words, when the terminal may have a service requirement or a network access requirement, the security connection may be established, by sending the first request, between the terminal and the first network function corresponding to the first request.

In a possible design solution, the second network function is an access and mobility management function AMF or access management AM.

Optionally, when the second network function is an AMF, the first network function is at least one of the following: a session management function SMF, a policy control function PCF, a location management function LMF, a network data analytics function NWDAF, and a short message service function SMSF.

Optionally, when the second network function is AM, the first network function is at least one of the following: mobility management MM, proxy, and load balance LB.

In addition, for technical effects of the method according to the fourth aspect, refer to the technical effects of the method according to the first aspect. Details are not described herein again.

According to a fifth aspect, a communication apparatus is provided. The communication apparatus includes modules configured to perform the method according to the first aspect, for example, a processing module and a transceiver module. For example, the transceiver module is configured to receive a first request; the processing module is configured to obtain a first key of a first network function based on the first request; and the processing module is further configured to determine a security key based on the first key. The first request is used by a terminal to request establishment of a service with the first network function, or the first request is used by the terminal to request access to a network. The first network function is a network function other than the second network function in the network. The second network function is used for access management of the terminal. The security key is used for establishing a security connection between the terminal and the first network function.

Optionally, the transceiver module may include a sending module and a receiving module. The sending module is configured to implement a sending function of the communication apparatus according to the fifth aspect, and the receiving module is configured to implement a receiving function of the communication apparatus according to the fifth aspect.

Optionally, the communication apparatus according to the fifth aspect may further include a storage module. The storage module stores a program or instructions. When the processing module executes the program or the instructions, the communication apparatus is enabled to perform the method according to the first aspect.

It may be understood that the communication apparatus according to the fifth aspect may be a terminal, for example, a remote device, or may be a chip (system) or another part or component that may be disposed in the terminal, or may be an apparatus including the terminal. This is not limited in this application.

In addition, for technical effects of the communication apparatus according to the fifth aspect, refer to the technical effects of the method according to the first aspect. Details are not described herein again.

According to a sixth aspect, a communication apparatus is provided. The communication apparatus includes modules configured to perform the method according to the second aspect, for example, a processing module and a transceiver module. For example, the transceiver module is configured to receive a first request; the processing module is configured to obtain a first key of a first network function based on the first request; and the transceiver module is further configured to send the first key to the first network function. The second network function is used for access management of a terminal. The first request is used by the terminal to request establishment of a service with the first network function, or the first request is used by the terminal to request access to a network. The first network function is a network function other than the second network function in the network. The first key is used for determining a security key used for establishing a security connection between the terminal and the first network function.

Optionally, the transceiver module may include a sending module and a receiving module. The sending module is configured to implement a sending function of the communication apparatus according to the sixth aspect, and the receiving module is configured to implement a receiving function of the communication apparatus according to the sixth aspect.

Optionally, the communication apparatus according to the sixth aspect may further include a storage module. The storage module stores a program or instructions. When the processing module executes the program or the instructions, the communication apparatus is enabled to perform the method according to the second aspect.

It may be understood that the communication apparatus according to the sixth aspect may be a terminal, for example, a remote device, or may be a chip (system) or another part or component that may be disposed in the terminal, or may be an apparatus including the terminal. This is not limited in this application.

In addition, for technical effects of the communication apparatus according to the sixth aspect, refer to the technical effects of the method according to the second aspect. Details are not described herein again.

According to a seventh aspect, a communication apparatus is provided. The communication apparatus includes modules configured to perform the method according to the third aspect, for example, a processing module and a transceiver module. For example, the transceiver module is configured to receive a second request; the processing module is configured to obtain a first key of a first network function based on the second request; and the transceiver module is further configured to send a first response. The second request is used to request the third network function to generate a key of the first network function. The key of the first network function is used for determining a security key used for establishing a security connection between a terminal and the first network function. The first network function is a network function other than a second network function in a network. The second network function is used for access management of the terminal. The first response carries the first key. The first response is a response message for the second request.

Optionally, the transceiver module may include a sending module and a receiving module. The sending module is configured to implement a sending function of the communication apparatus according to the seventh aspect, and the receiving module is configured to implement a receiving function of the communication apparatus according to the seventh aspect.

Optionally, the communication apparatus according to the seventh aspect may further include a storage module. The storage module stores a program or instructions. When the processing module executes the program or the instructions, the communication apparatus may be enabled to perform the method according to the third aspect.

It may be understood that the communication apparatus according to the seventh aspect may be a terminal, for example, a remote device, or may be a chip (system) or another part or component that may be disposed in the terminal, or may be an apparatus including the terminal. This is not limited in this application.

In addition, for technical effects of the communication apparatus according to the seventh aspect, refer to the technical effects of the method according to the third aspect. Details are not described herein again.

According to an eighth aspect, a communication apparatus is provided. The communication apparatus includes modules configured to perform the method according to the fourth aspect, for example, a processing module and a transceiver module. For example, the transceiver module is configured to receive a first message from a first network function; the processing module is configured to generate a second message; and the transceiver module is further configured to send the second message to the first network function. The first message includes information indicating a key of the first network function. The first network function is a network function other than a second network function in a network. The second network function is used for access management of a terminal. The second message indicates whether the terminal determines a security key used for establishing a security connection between the terminal and the first network function.

Optionally, the transceiver module may include a sending module and a receiving module. The sending module is configured to implement a sending function of the communication apparatus according to the eighth aspect, and the receiving module is configured to implement a receiving function of the communication apparatus according to the eighth aspect.

Optionally, the communication apparatus according to the eighth aspect may further include a storage module. The storage module stores a program or instructions. When the processing module executes the program or the instructions, the communication apparatus may be enabled to perform the method according to the fourth aspect.

It may be understood that the communication apparatus according to the eighth aspect may be a terminal, for example, a remote device, or may be a chip (system) or another part or component that may be disposed in the terminal, or may be an apparatus including the terminal. This is not limited in this application.

In addition, for technical effects of the communication apparatus according to the eighth aspect, refer to the technical effects of the method according to the fourth aspect. Details are not described herein again.

According to a ninth aspect, a communication apparatus is provided. The apparatus includes a processor and a communication interface. The processor is configured to execute computer instructions. The communication interface is configured to perform communication. In this way, the method according to any possible implementation of the first aspect, the second aspect, the third aspect, or the fourth aspect is implemented.

According to a tenth aspect, a communication apparatus is provided. The communication apparatus includes a processor. The processor is configured to perform the method according to any possible implementation of the first aspect, the second aspect, the third aspect, or the fourth aspect.

In a possible design solution, the communication apparatus according to the tenth aspect may further include a transceiver. The transceiver may be a transceiver circuit or an interface circuit. The transceiver may be used by the communication apparatus according to the tenth aspect to communicate with another communication apparatus.

In a possible design solution, the communication apparatus according to the tenth aspect may further include a memory. The memory and the processor may be integrated together, or may be disposed separately. The memory may be configured to store a computer program and/or data related to the method according to any one of the first aspect, the second aspect, the third aspect, or the fourth aspect.

In this embodiment of this application, the communication apparatus according to the tenth aspect may be the terminal according to any one of the first aspect, the second aspect, the third aspect, or the fourth aspect; or a chip (system) or another part or component that may be disposed in a terminal, or an apparatus including a terminal.

In addition, for technical effects of the communication apparatus according to the tenth aspect, refer to the technical effects of the method according to any implementation of the first aspect, the second aspect, the third aspect, or the fourth aspect. Details are not described herein again.

According to an eleventh aspect, a communication apparatus is provided. The communication apparatus includes a processor. The processor is coupled to a memory. The processor is configured to execute a computer program stored in the memory. In this way, the communication apparatus is enabled to perform the method according to any possible implementation of the first aspect, the second aspect, the third aspect, or the fourth aspect.

In a possible design solution, the communication apparatus according to the eleventh aspect may further include a transceiver. The transceiver may be a transceiver circuit or an interface circuit. The transceiver may be used by the communication apparatus according to the eleventh aspect to communicate with another communication apparatus.

In this embodiment of this application, the communication apparatus according to the eleventh aspect may be the terminal according to any one of the first aspect, the second aspect, the third aspect, or the fourth aspect; or a chip (system) or another part or component that may be disposed in a terminal, or an apparatus including a terminal.

In addition, for technical effects of the communication apparatus according to the eleventh aspect, refer to the technical effects of the method according to any implementation of the first aspect, the second aspect, the third aspect, or the fourth aspect. Details are not described herein again.

According to a twelfth aspect, a communication apparatus is provided, and includes a processor and a memory.

The memory is configured to store a computer program, and when the processor executes the computer program, the communication apparatus is enabled to perform the method according to any implementation of the first aspect, the second aspect, the third aspect, or the fourth aspect.

In a possible design solution, the communication apparatus according to the twelfth aspect may further include a transceiver. The transceiver may be a transceiver circuit or an interface circuit. The transceiver may be used by the communication apparatus according to the twelfth aspect to communicate with another communication apparatus.

In this embodiment of this application, the communication apparatus according to the twelfth aspect may be the terminal according to any one of the first aspect, the second aspect, the third aspect, or the fourth aspect; or a chip (system) or another part or component that may be disposed in a terminal, or an apparatus including a terminal.

In addition, for technical effects of the communication apparatus according to the twelfth aspect, refer to the technical effects of the method according to any implementation of the first aspect, the second aspect, the third aspect, or the fourth aspect. Details are not described herein again.

According to a thirteenth aspect, a communication system is provided. The communication system includes at least one of the following: a first network function configured to perform the method according to the first aspect, a second network function configured to perform the method according to the second aspect, a third network function configured to perform the method according to the third aspect, and a terminal configured to perform the method according to the fourth aspect.

According to a fourteenth aspect, a communication chip is provided. The communication chip stores instructions. When the chip runs on a communication device, the method according to any implementation of the first aspect, the second aspect, the third aspect, or the fourth aspect is implemented.

According to a fifteenth aspect, a computer-readable storage medium is provided, and includes a computer program or instructions. When the computer program or the instructions are run on a computer, the computer is enabled to perform the method according to any possible implementation of the first aspect, the second aspect, the third aspect, or the fourth aspect.

According to a sixteenth aspect, a computer program product is provided, and includes a computer program or instructions. When the computer program or the instructions are run on a computer, the computer is enabled to perform the method according to any possible implementation of the first aspect, the second aspect, the third aspect, or the fourth aspect.

## BRIEF DESCRIPTION OF DRAWINGS

FIG. 1 is a diagram 1 of an architecture of a communication system according to an embodiment of this application;
FIG. 2 is a diagram 1 of a key derivation procedure according to an embodiment of this application;
FIG. 3 is a diagram 2 of a key derivation procedure according to an embodiment of this application;
FIG. 4 is a diagram 2 of an architecture of a communication system according to an embodiment of this application;
FIG. 5 is a diagram 3 of an architecture of a communication system according to an embodiment of this application;
FIG. 6 is a schematic flowchart 1 of a security key determining method according to an embodiment of this application;
FIG. 7 is a schematic flowchart 2 of a security key determining method according to an embodiment of this application;
FIG. 8 is a schematic flowchart 3 of a security key determining method according to an embodiment of this application;
FIG. 9 is a schematic flowchart 4 of a security key determining method according to an embodiment of this application;
FIG. 10 is a schematic flowchart 5 of a security key determining method according to an embodiment of this application;
FIG. 11 is a schematic flowchart 6 of a security key determining method according to an embodiment of this application;
FIG. 12 is a schematic flowchart 7 of a security key determining method according to an embodiment of this application;
FIG. 13 is a schematic flowchart 8 of a security key determining method according to an embodiment of this application;
FIG. 14 is a diagram 1 of a structure of a communication apparatus according to an embodiment of this application; and
FIG. 15 is a diagram 2 of a structure of a communication apparatus according to an embodiment of this application.

## DESCRIPTION OF EMBODIMENTS

For ease of understanding, the following first describes technical terms in embodiments of this application.

## 1. 5th generation (5th generation, 5G) mobile communication system

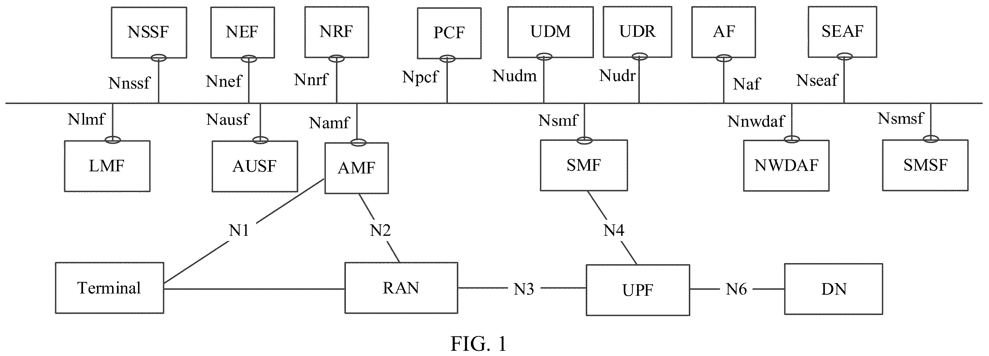

As shown in FIG. 1, the 5G system includes a terminal, an access network (access network, AN), and a CN.

There may be one or more terminals, for example, a first terminal, a second terminal, and a third terminal. The terminal may be a terminal having receiving and sending functions, or may be a chip or a chip system disposed in the terminal. The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine-type communication (machine-type communication, MTC) terminal, a computer having wireless sending and receiving function, a virtual reality (virtual reality, VR) terminal, an augmented reality (augmented reality, AR) terminal, a smart home device (for example, a refrigerator, a television, an air conditioner, or a meter), a smart robot, a robot arm, a workshop device, a wireless terminal in self driving, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) or the like having a terminal function, a flight device (for example, a smart robot, a hot air balloon, an uncrewed aerial vehicle, or an airplane), or the like. The terminal in this application may alternatively be a vehicle-mounted module, a vehicle-mounted assembly, a vehicle-mounted component, a vehicle-mounted chip, or a vehicle-mounted unit that is built in a vehicle as one or more components or units. The terminal device may alternatively be another device having a terminal function. For example, the terminal device may alternatively be a device that functions as a terminal in D2D communication.

The foregoing AN is used for implementing an access-related function, may provide a network access function for an authorized user in a specific area, and can determine transmission links with different quality based on a user level, a service requirement, and the like, to perform transmission of user data. The AN forwards a control signal and the user data between the terminal and the CN. The AN may include an access network device, or may be referred to as a radio access network (radio access network, RAN) device.

The RAN device may be a device providing access for the terminal, and is mainly responsible for functions such as radio resource management, quality of service (quality of service, QoS) management, and data compression and encryption on an air interface side. The RAN device may include a gNB in 5G (for example, a new radio (new radio, NR) system), or one or a group (including a plurality of antenna panels) of antenna panels of a base station in 5G, or may be a network node, for example, a baseband unit (baseband unit, BBU), a central unit (central unit, CU) or a distributed unit (distributed unit, DU), an RSU having a base station function, a wired access gateway, or a 5G core network element, that forms a gNB, a transmission point (transmission and reception point, TRP, or transmission point, TP), or a transmission measurement function (transmission measurement function, TMF). Alternatively, the RAN device may further include an access point (access point, AP), a wireless relay node, a wireless backhaul node, macro base stations in various forms, a micro base station (also referred to as a small cell), a relay station, an access point, a wearable device, a vehicle-mounted device, and the like in a wireless fidelity (wireless fidelity, Wi-Fi) system. Alternatively, the RAN device may include a next generation mobile communication system, for example, a 6G access network device such as a 6G base station. Alternatively, in a next generation mobile communication system, the network device may be named in another manner, which falls within the protection scope of embodiments of this application. This is not limited in this application.

The CN is mainly responsible for maintaining subscription data of a mobile network, and provides functions such as session management, mobility management, policy management, and security authentication for the terminal. The CN mainly includes the following network functions: a user plane function (user plane function, UPF), an authentication server function (authentication server function, AUSF), an access and mobility management function (access and mobility management function, AMF), a session management function (session management function, SMF), a network slice selection function (network slice selection function, NSSF), a network exposure function (network exposure function, NEF), a network function repository function (NF repository function, NRF), a policy control function (policy control function, PCF), unified data management (unified data management, UDM), an application function (application function, AF), a network slice-specific and standalone non-public network (standalone non-public network, SNPN) authentication and authorization function (network slice-specific and SNPN authentication and authorization function, NSSAAF), a location management function (location management function, LMF), a network data analytics function (network data analytics function, NWDAF), a short message service function (short message service function, SMSF), and a security anchor function (security anchor function, SEAF).

The UPF is mainly responsible for user data processing (forwarding, receiving, charging, and the like). For example, the UPF may receive user data from a data network (data network, DN), and forward the user data to the terminal via the access network device. The UPF may also receive user data from the terminal via the access network device, and forward the user data to the DN. The DN is an operator network that provides a data transmission service for a user, for example, an internet protocol (internet protocol, IP) multi-media service (IP multi-media service, IMS) or an internet (internet). The DN may be an external network of an operator or may be a network controlled by an operator, and is configured to provide services for the terminal device.

The AUSF may be configured to perform security authentication for a terminal to access a network.

The AMF is mainly responsible for access and mobility management in a mobile network, for example, user location update, registration of a user with a network, and user handover.

The SMF is mainly responsible for session management in the mobile network, for example, session establishment, modification, and release. A specific function is, for example, allocating an internet protocol (internet protocol, IP) address to a user, or selecting a UPF that provides a packet forwarding function.

The PCF mainly supports a unified policy framework to govern network behaviors, provides policy rules for a control layer network function, and is responsible for obtaining user subscription information related to policy decisions. The PCF may provide the AMF and the SMF with policies, for example, a quality of service (quality of service, QoS) policy and a slice selection policy.

The NSSF may be configured to select a network slice for the terminal.

The NEF may be used for capability supporting and event exposure.

The UDM may be configured to manage user data, for example, subscription data and authentication/authorization data.

The AF mainly supports interaction with the CN to provide services, for example, impact on data routing decision-making, a policy control function, or provision of some third-party services for a network side.

The NSSAAF may be configured to: support slice authentication and authorization, and support access to an independent non-public network based on a credential of a credential holder. The NSSAAF may interact with an authentication, authorization, and accounting server (authentication, authorization, and accounting server, AAA-S) through an authentication, authorization, and accounting proxy (authentication, authorization, and accounting proxy, AAA-P).

The LMF may be configured to manage location information of a terminal, and provide a positioning service for the terminal.

The NWDAF may be configured to collect data in a network, perform analysis and prediction, and provide a data analysis service for another network function.

The SMSF may be configured to manage short message service subscription data of a terminal, forward an SMS message for the terminal, and charge a short message service.

The SEAF may be configured to derive a NAS key and an AS key based on a key transferred by the AUSF, to protect data in a communication procedure. An authentication procedure is initiated, and an authentication service of the AUSF is invoked.

2. Key derivation procedure

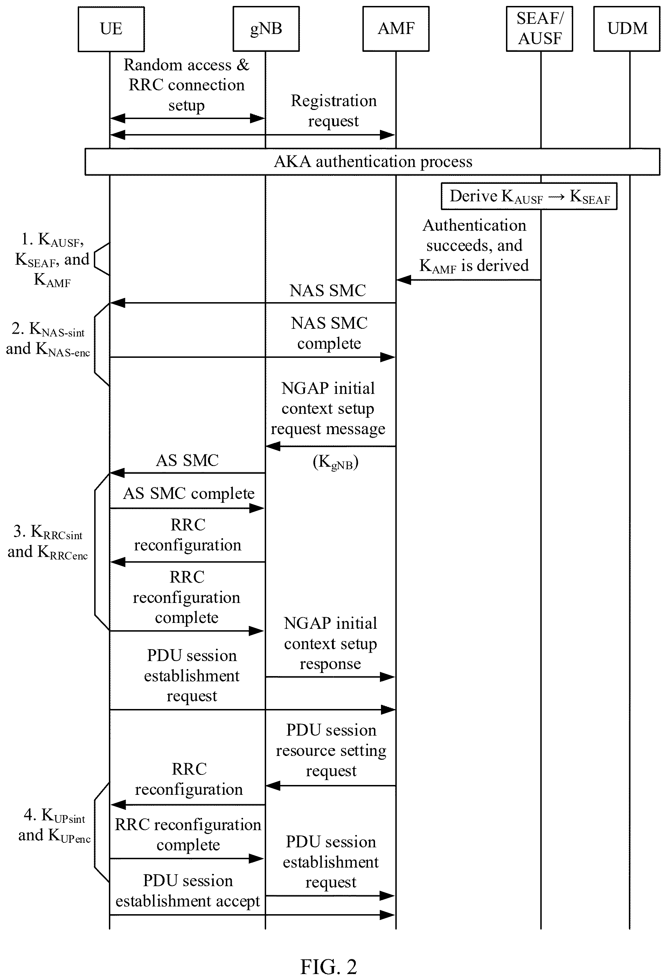

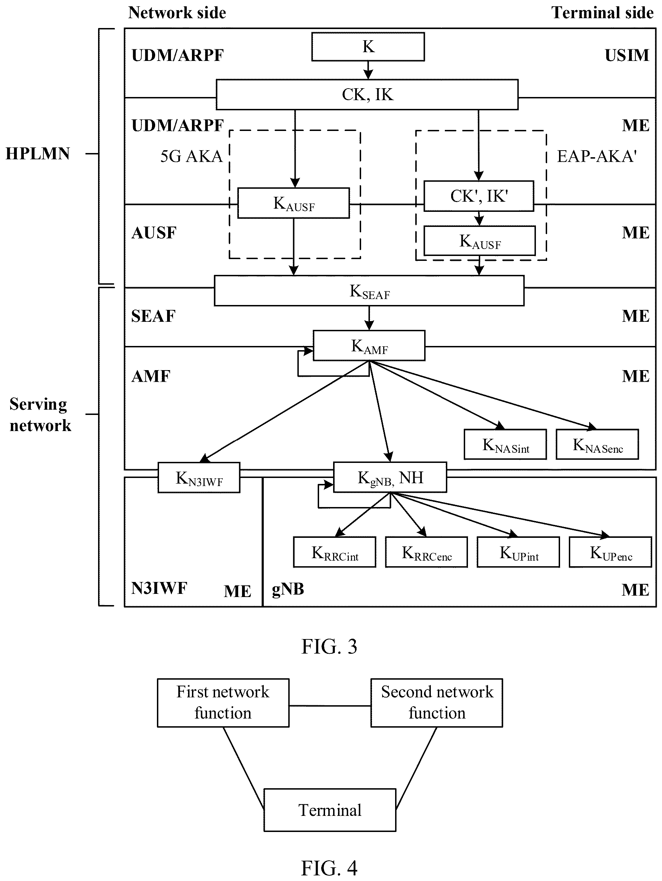

As shown in FIG. 2 and FIG. 3, after a terminal is connected to a RAN by using a random access and RRC connection setup procedure, the terminal initiates initial access, and uses a subscription concealed identifier (subscription concealed identifier, SUCI) in a registration request (registration request). After 5G authentication and key agreement (authentication and key agreement, AKA) authentication succeeds, the terminal and a UDM derive a key $K_{AUSF}$ of an AUSF based on an authentication vector. The authentication vector includes an encryption key (cipher key, CK) and an integrity key (integrity key, IK). The terminal and the AUSF derive (derive) a security anchor key $K_{SEAF}$ based on $K_{AUSF}$. The terminal and an SEAF derive $K_{AMF}$ based on $K_{SEAF}$. It may be understood that when an extensible authentication protocol-authentication and key agreement (Extensible Authentication Protocol-AKA, EAP-AKA') authentication manner is used, the AUSF receives authentication vectors CK' and IK' from an authentication credential repository and processing function (authentication credential repository and processing function, ARPF), and the terminal and the AUSF derive $K_{AUSF}$ based on CK' and IK'.

In a NAS security mode command (security mode command, SMC) phase, the terminal derives $K_{gNB}$ based on $K_{AUSF}$; and an AMF derives $K_{gNB}$ based on $K_{AMF}$, and the AMF sends derived $K_{GNB}$ to a gNB. The AMF does not send an NH (next hop) value to the gNB during initial connection setup. After receiving a next generation application protocol (next generation application protocol, NGAP) initial context setup request (initial context setup request) message delivered from the AMF, the gNB initializes an NH chaining count (next hop chaining count, NCC) to 0, and the NCC is used for subsequent key update.

In an access stratum (access stratum, AS) SMC phase, the gNB derives a signaling plane encryption key $K_{RRCenc}$ and an integrity protection key $K_{RRCint}$. After receiving the SMC message, the terminal determines encryption and integrity protection algorithms and derives $K_{RRCint}$ and $K_{RRCenc}$. The gNB sends a security algorithm selection result to the terminal through an AS SMC message. The AS SMC message and an AS SMC complete (complete) message are sent through an SRB1. The gNB and the terminal separately perform integrity protection without encryption protection.

The AMF sends a security policy result to the gNB by using a protocol data unit (protocol data unit, PDU) session request (Session Request) feedback message. A security policy includes an activation indication of encryption and integrity protection. After a PDU session (session) is established, a user plane security policy is activated. The gNB and the terminal derive a user plane encryption key $K_{UPint}$ and integrity protection key $K_{UPenc}$ based on $K_{gNB}$.

It may be understood that "derive" mentioned in embodiments of this application is merely an expression example, and "derive" may be replaced with any possible expression, for example, "determine", "generate", or "deduce". This is not limited.

3. Key derivation method

All keys in a 5G system are derived using a key derivation function (key derivation function, KDF) specified in the 3rd generation partnership project (3rd Generation Partnership Project, 3GPP) TS 33.220 v17.4. Annex B.2.0. Input of the KDF function includes a key (Key) and an input parameter. The output parameter is a character string S. The key is a key used for key derivation. For example, if a key #1 is derived based on a key #2, the key #2 is a key of the key #1. To be specific, key derivation may be HMAC-SHA-256 (Key, S), where HMAC-SHA-256 is a specific function in the KDF function. For a specific principle of HMAC-SHA-256, refer to principles in the conventional technologies. Details are not described herein.

The character string S is constructed by using n+1 input parameters. An expression of the character string is as follows:

$$S=FC\|P0\|L0\|P1\|L1\|P2\|L2\|P3\|L3\|...\|Pn\|Ln$$

Herein, FC is used to distinguish between different instances of an algorithm. P0, ..., and Pn are codes of the n+1 input parameters; and L0, ..., and Ln are lengths of the corresponding input parameter codes P0, ..., and Pn.

For example, in derivation of $K_{AMF}$, the key is $K_{SEAF}$, and the input parameters of the character string S are FC = 0x6D, P0 = IMSI or NAI or GCI or GLI, L0 = P0 length - Number of octets in P0, P1 = ABBA parameter, and L1 = P1 length - Number of octets in P1, where P0 is an identifier of the terminal, and P1 is a customized parameter sent by the SEAF to the terminal.

In an existing network architecture, for example, in a 5G communication system, message transmission between a terminal and a network side is a centralized processing manner. To be specific, a control plane message between the terminal and a network function other than an AMF on the network side needs to be forwarded by the AMF. In other words, security protection only needs to be implemented between the terminal and the AMF, and mutual security protection only needs to be implemented between the terminal and the another network function.

However, in a future communication requirement, the terminal may directly communicate with each network function in a network. In other words, the AMF does not need to forward a message between the terminal and each network function. In this way, security protection also needs to be implemented for communication between the terminal and each network function in the network. In other words, a future communication requirement cannot be met only by ensuring communication security between the terminal and the AMF. It should be understood that direct communication means that information exchange between the terminal and each network function does not need to be performed through forwarding by the AMF, but corresponding information exchange still needs to be implemented by using an air interface and a RAN.

For the foregoing technical problem, embodiments of this application propose that when the terminal directly communicates with each network function, a security connection may be established between the terminal and each network function based on a key, to implement security protection between the terminal and each network function, thereby ensuring communication security and meeting a future communication requirement.

The following describes technical solutions of this application with reference to accompanying drawings.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system and a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used for presenting a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. Terms "of (of)", "corresponding (corresponding, relevant)", and "corresponding (corresponding)" may be interchangeably used sometimes. It should be noted that meanings expressed by the terms are consistent when differences of the terms are not emphasized.

In embodiments of this application, a subscript, for example, $W_1$, may sometimes be written in an incorrect form, for example, W1. Expressed meanings are consistent when differences are not emphasized.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For ease of understanding of embodiments of this application, a communication system shown in FIG. 4 is first used as an example to describe in detail a communication system applicable to embodiments of this application. For example, FIG. 4 is a diagram of an architecture of a communication system to which a security key determining method is applicable according to an embodiment of this application.

As shown in FIG. 4, the communication system mainly includes a first network function, a second network function, and a terminal. Optionally, a third network function may be further included.

The communication system may be applied to the foregoing 5G architecture. In this case, the first network function may be a network function other than the second network function in a network, for example, an SMF, a PCF, an LMF, an NWDAF, or an SMSF. The second network function may be used for access management of a terminal, and may be an AMF. The third network function may derive a key of the first network function. In other words, the third network function may be the AMF or an SEAF. In other words, in some cases, the second network function and the third network function are different network functions. For example, the second network function is an AMF, and the third network function is an SEAF. Alternatively, in some other cases, the second network function and the third network function are a same network function. For example, both the second network function and the third network function are an AMF.

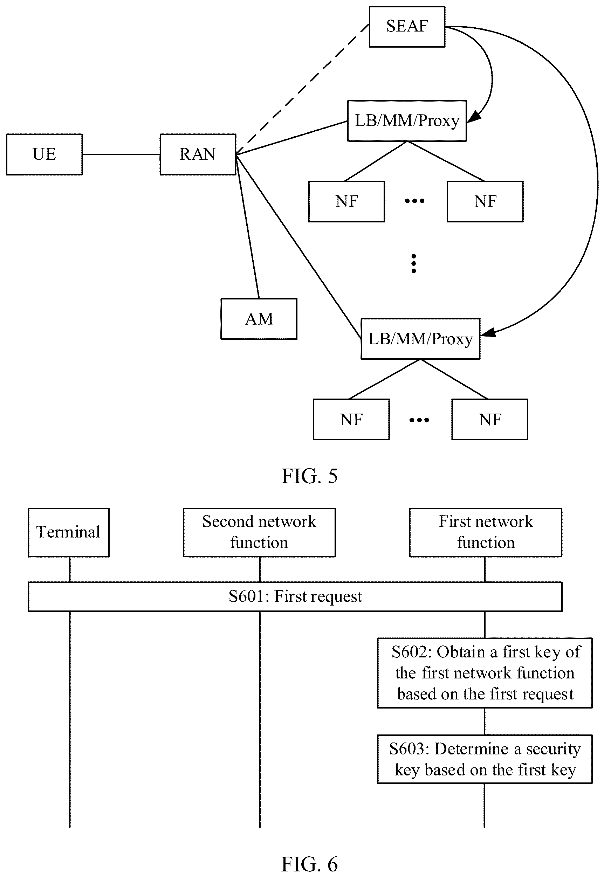

The communication system may be further applied to an architecture of a future communication system. For example, as shown in FIG. 5, the architecture may include an AN and a CN, and may further include a terminal. For descriptions of the AN and the terminal, refer to the foregoing related descriptions. The CN is mainly responsible for maintaining subscription data of a mobile network, and provides functions such as session management, mobility management, policy management, and security authentication for the terminal. The CN mainly includes an access management (access management, AM) function, an SEAF, and at least one subnet. The AM is used for network access management, for example, responsible for accessing different subnets by the terminal. Each of the at least one subnet mainly includes a network function used for mobility management of the terminal, and at least one network function (network function, NF). The network function used for mobility management of the terminal may be a mobility management (mobility management, MM) function, proxy (proxy), or a load balance (load balance, LB) function. The NF may be any one of the following: a UPF, an AUSF, an SMF, an NSSF, an NEF, an NRF, a PCF, a UDM, an AF, and an NSSAAF. The NF may alternatively be another network function. This is not limited herein. For the descriptions of the foregoing network functions, refer to the foregoing related descriptions. Details are not described herein again. In this case, the first network function may be a network function other than the second network function in the network. For example, the first network function may be a network function used for mobility management of the terminal, that is, MM, proxy, or LB. The second network function may be used for access management of the terminal, and may be AM. The third network function may derive a key of the first network function. In other words, the third network function may be the AM or an SEAF. In other words, in some cases, the second network function and the third network function are different network functions. For example, the second network function is AM, and the third network function is an SEAF. Alternatively, in some other cases, the second network function and the third network function are a same network function. For example, both the second network function and the third network function are AM.

In the communication system, the terminal may directly communicate with the first network function in the network, and the AMF does not need to forward a message between the terminal and the first network function. In addition, a security connection may be established between the terminal and the first network function by using a security key, so that communication security between the terminal and the first network function can be ensured, thereby ensuring security of the communication system and meeting a future communication requirement.

It may be understood that the "network function" mentioned in embodiments of this application is merely an expression example, and the "network function" may be replaced with any possible expression, such as "network element", "entity", or "apparatus". This is not limited.

It should be noted that the solutions in embodiments of this application may alternatively be applied to another communication system, and a corresponding name may alternatively be replaced with a name of a corresponding function in the another communication system.

It should be understood that FIG. 4 is merely a simplified diagram used as an example for ease of understanding. The communication system may further include another network device and/or another terminal device, which are not drawn in FIG. 4.

For ease of understanding, the following describes in detail the security key determining method provided in embodiments of this application with reference to FIG. 6.

For example, FIG. 6 is a schematic flowchart 1 of a security key determining method according to an embodiment of this application. The method is mainly applicable to communication between a terminal and a first network function in the foregoing communication system.

As shown in FIG. 6, a procedure of the method is as follows:

S601: A terminal sends a first request to a first network function. Correspondingly, the first network function receives the first request from the terminal.

It should be understood that the first network function is a network function of CN, and information exchange between the terminal and the first network function is implemented by using a RAN device. To be specific, information sent by the terminal to the first network function and information sent by the first network function to the terminal need to be forwarded by using the RAN device (including direct forwarding or forwarding after processing). The first request is used by the terminal to request establishment of a service with the first network function, or the first request is used by the terminal to request access to a network. For example, the first request may be a service request, and is used by the terminal to request establishment of a service with the first network function. For another example, the first request may be an access request, and is used by the terminal to request access to the network. Cases are separately described below.

Case 1: The terminal has accessed the network, and the terminal has a service requirement with the network. In this case, the terminal may send the service request to a network function in the network. For example, the terminal directly sends the service request to the network function. For another example, the terminal may forward the service request to the network function by using a second network function (for example, an AMF). The service request may carry at least one of the following: an identifier of the terminal, for example, an SUPI, an identifier of a service, a service-related parameter, and information about a network function related to a service, for example, an identifier of the first network function, to jointly indicate that the terminal requests establishment of a service with the first network function. After receiving the service request, the second network function may forward the service request to the first network function. Correspondingly, the first network function may receive the service request from the second network function.

For example, if UE needs to transmit service data to a DN or an application server, the UE may first request establishment of a PDU session with an SMF (the first network function) for a service. In this case, the UE may send a session establishment request (a service request) to an AMF, and the AMF forwards the session establishment request to an SMF.

Case 2: If the terminal does not access the network, and the terminal needs to access the network, the terminal may send the access request to a network function in the network, for example, a second network function (for example, AM). The access request may carry at least one of the following: information about the terminal and an identifier of the network, that is, an identifier of the network that the terminal requests to access, to indicate that the terminal requests to access the network. After receiving the access request, the second network function may forward the access request to the first network function. Correspondingly, the first network function may receive the access request from the second network function.

For example, UE does not access a network #1, and the UE needs to access the network #1. In this case, the UE may send an access request to AM, and the AM forwards the access request to MM corresponding to the network #1.

It may be understood that the AM may determine, based on the identifier of the network, the first network function corresponding to the access request. The identifier of the network may be obtained in a plurality of manners. For example, when the access request carries the identifier of the network, the AM may obtain the identifier from the access request; or when the information about the terminal includes the identifier of the network, the AM may obtain the identifier from the information about the terminal. The information about the terminal may be carried in the access request, or preconfigured in the AM. This is not limited in this embodiment of this application.

In addition, the first request may further carry some security-related information. For details, refer to the following related descriptions of S602 and S603. Details are not described herein.

S602: The first network function obtains a first key of the first network function based on the first request.

The first key may be used for determining a security key. The security key may be used for establishing a security connection between the terminal and the first network function, for example, performing encryption and integrity protection on information transmitted between the terminal and the first network function.

To be specific, the target security key may include an encryption key and an integrity protection key. In a possible implementation, the security key may be a NAS security key, for example, $K_{NASenc}$ and $K_{NASint}$. Correspondingly, the security connection may be a NAS security connection.

The first network function may obtain the first key in a plurality of manners, for example, obtain the first key from another network function, or obtain the first key locally. The manners are separately described below.

Manner 1: The first network function obtains the first key from the another network function.

(1) The first network function may send a second request to a third network function based on the first request. Correspondingly, the third network function receives the second request from the first network function.

The second request may be used to request the third network function to derive a key of the first network function.

In a possible manner, the second request may indicate, by using a message type, that the third network function needs to derive the key of the first network function. For example, the second request may be a new message, for example, a key derivation request. The third network function determines, based on a message type of the second request, to derive a key for the first network function. It may be understood that different network functions may reuse second requests in different message types, and the third network function may determine, based on the message type, a specific network function for which a key is derived.

In another possible manner, the second request may indicate, in a message reuse manner, that the third network function needs to derive the key of the first network function. For example, the second request may be an existing message, and a specific message is not limited. In other words, the existing message is reused by a new network function (the first network function). Correspondingly, the third network function determines, based on that the second request is reused by the first network function, to derive a key for the first network function.

In still another possible manner, the second request may carry an indication information element to indicate that the third network function needs to derive the key of the first network function. For example, the indication information element may be an identifier of the first network function or a type of the first network function, and indicate that the third network function needs to derive the key of the first network function.

Certainly, the second request may be further implemented in another manner. This is not limited in this embodiment of this application.

Optionally, the second request may further carry first information, and the first information may be used as an input parameter for deriving the key of the first network function. For example, the first information may include at least one of the following: information about the terminal, information about the first request, information about the first network function, an identifier of the network, and a security parameter of the network.

The information about the terminal may be an identifier of the terminal, for example, an SUPI, an international mobile subscriber identity (international mobile subscriber identity, IMSI), or a globally unique temporary identifier (globally unique temporary identity, GUTI); or address information of the terminal, for example, an internet protocol (internet protocol, IP) address or a media access control (media access control, MAC) address. The information about the first request may be a type of a service, for example, a session service, a policy service, a positioning service, or a data service; or may be a specific identifier of a service, for example, a session identifier, an identifier of a policy service, an identifier of a positioning service, or an identifier of a data service. The information about the first network function may be an identifier of the first network function, for example, an SMF identifier or a PCF identifier. The identifier of the network may be an identifier of an operator, a slice identifier, a non-public network (non-public network, NPN) identifier, or a group identifier, for example, an identifier of a closed access group (closed access group, CAG). The security parameter of the network may be an owner (owner) or a user (user) of the network, for example, a tenant of a network slice or a renter of an NPN network, or a parameter customized by an operator. It may be understood that, for the network slice, the security parameter of the network may be customized by the tenant of the slice, for example, a group of random numbers or a character string associated with the identifier of the terminal; or for an NPN, the security parameter of the network may be customized by a holder of the NPN. The security parameter of the network may be sent over a security link by the owner of the network to the first network function, the second network function, and the third network function for use, or may be preconfigured locally in the first network function, or may be stored in a data storage function and is obtained by the first network function, the second network function, and the third network function from the data storage function. A method for configuring and obtaining the security parameter of the network is not limited in this embodiment of this application.

Alternatively, the first information may be locally preconfigured or preset in the third network function according to a protocol. This is not limited in this embodiment of this application.

It may be understood that the first information is related to the first request. To be specific, when the first request is a service request, the first information may be at least one of the following: information about the terminal, information about the first request, and information about the first network function. When the first request is an access request, the first information may be at least one of the following: information about the terminal, an identifier of the network, and a security parameter of the network.

(2) The third network function may obtain the first key of the first network function based on the second request.

The third network function may determine the first key based on a second key. The second key may be a key of the third network function, and is used for determining the key of the first network function. In other words, the second key may be a key used for deriving the key of the first network function. The third network function may be an AMF, AM, or an SEAF. Correspondingly, the second key may be $K_{AMF}$, $K_{AM}$, or $K_{SEAF}$, where $K_{AM}$ is a key of the AM.

When the third network function is different network functions, manners in which the third network function obtains the second key may be different. Description is separately provided below.

Case 1.1:

When the third network function is an SEAF, the SEAF obtains $K_{SEAF}$ in two manners. The two manners are respectively as follows: The SEAF may obtain $K_{SEAF}$ from a location at which the SEAF stores $K_{SEAF}$. In other words, $K_{SEAF}$ is preconfigured in the SEAF. $K_{SEAF}$ may be obtained based on the foregoing key derivation process, or may be obtained in another manner. This is not limited. Alternatively, the SEAF obtains $K_{SEAF}$ from an AUSF. For example, after receiving the second request, the SEAF may send a third request, for example, an authentication request message, to the AUSF, to request the AUSF to derive $K_{SEAF}$. Correspondingly, the AUSF may derive $K_{SEAF}$ based on the third request by using $K_{AUSF}$, and send a second response to the SEAF, where the second response carries $K_{SEAF}$. For a specific implementation principle of deriving $K_{SEAF}$ by the AUSF based on $K_{AUSF}$, refer to the foregoing key derivation procedure. Details are not described herein again.

It may be understood that, after the SEAF obtains $K_{SEAF}$ from the AUSF, the SEAF may locally store $K_{SEAF}$ for subsequent use; or the SEAF may delete $K_{SEAF}$ after using $K_{SEAF}$, and obtain $K_{SEAF}$ from the AUSF again when $K_{SEAF}$ needs to be subsequently used.

Case 1.2:

When the third network function is an AMF or AM, the second key is $K_{AMF}$ or $K_{AM}$ and the second key may be locally preconfigured or predefined in the third network function according to a protocol. In other words, the AMF or the AM may directly obtain and use $K_{AMF}$ or $K_{AM}$ locally. Alternatively, $K_{AMF}$ or $K_{AM}$ may be obtained based on the foregoing key derivation process, or may be obtained in another manner. This is not limited.

For Case 1.1 or Case 1.2 above, after obtaining the second key, the third network function may use the second key as an input parameter to derive the first key, or may use the second key and the first information as input parameters to derive the first key. For description of the first information, refer to the foregoing related description. Details are not described again. Certainly, the input parameter may not be limited to the second key, or the second key and the first information, and may further include another input parameter. For details, refer to related descriptions of "3. Key derivation method" above. Details are not described herein again.

(3) The third network function may send a first response to the first network function. Correspondingly, the first network function receives the first response from the third network function. The first response is used to respond to the second request. In other words, the first response is a response message for the second request, that is, the first response is a response message carrying the first key. For example, the first response may be a key derivation response, and is used to respond to the key derivation request.

Manner 2: The first network function locally obtains the first key.

For example, the first network function may obtain the second key based on the first request, to locally determine the first key based on the second key. The first network function obtains the second key in a plurality of manners. The manners are separately described below.

Case 2.1: The first network function locally obtains the second key. In other words, the second key may be preconfigured in advance or may be preset locally in the first network function according to a protocol. After receiving the first request, the first network function may trigger, by using the first request, the first network function to directly obtain the second key locally. If the first network function does not receive the first request, the first network function does not obtain the second key.

Case 2.2: The first network function obtains the second key from the first request. In other words, the second key may be carried in the first request. For example, the second network function is the same as the third network function, that is, the second network function and the third network function are an AMF or AM. In this case, when forwarding the first request to the first network function, the second network function may also add the second key (for example, $K_{AMF}$ or $K_{AM}$) of the second network function to the first request.

Case 2.3: The first network function obtains the second key from the third network function. The first network function triggers, based on the first request, the first network function to obtain the second key from the third network function. For example, the first network function sends a fourth request to the third network function based on the first request. The fourth request is used to request the third network function to send the second key. The third network function obtains the second key based on the fourth request, and sends, to the first network function, a third response carrying the second key. Correspondingly, the first network function receives the third response from the third network function, and obtains the second key from the third response.

The fourth request may indicate, by using a message type, the third network function to send the second key to the first network function. For example, the fourth request may be a new message; and the third network function obtains the second key based on a type of the new message, and sends the second key to the first network function. Alternatively, the fourth request may indicate, in a message reuse manner, the third network function to send the second key to the first network function. For example, the fourth request may be an existing message. This is not specifically limited. The fourth request may further carry an indication information element to indicate the third network function to send the second key to the first network function. For example, the indication information element may be an identifier of the first network function, and indicate the third network function to send the second key to the first network function.

It may be understood that, in the foregoing cases, the second key may be preconfigured in the third network function; or the third network function may obtain the second key when the second key needs to be used. This is not limited. For descriptions of obtaining the second key by the third network function, refer to the foregoing related descriptions. Details are not described herein again.

For Case 2.1 and Case 2.3 above, after obtaining the second key, the first network function may use the second key as an input parameter to determine the first key, or may use the second key and the first information as input parameters to determine the first key. For description of the first information, refer to the foregoing related description. Details are not described again. Certainly, the input parameter may not be limited to the second key, or the second key and the first information, and may further include another input parameter. For details, refer to related descriptions of "3. Key derivation method" above. Details are not described herein again.

In addition, after the first network function obtains the first key, the first network function may further send the first key to the second network function, so that the second network function adds the first key to a new first request subsequently sent to the first network function, or the second network function may subsequently provide the first key for the first network function based on a request of the first network function. Alternatively, the first network function may further send the first key to a key management function, so that the key management function subsequently provides the first key to the first network function based on a request of the first network function. In other words, the key management function may be a function responsible for key management, and may further be a data storage function. Alternatively, the first network function may locally store the first key.

It may be further understood that if there are a plurality of first network functions with a same function in the network, for example, a plurality of SMFs, a first key of one first network function may be reused by the plurality of first network functions, or each first network function may have a respective first key.

S603: The first network function determines a security key based on the first key.

For descriptions of the security key, refer to the foregoing related descriptions.

After obtaining the first key, the first network function may use the first key as an input parameter to determine the security key, or may use the first key and second information as input parameters to determine the security key. Certainly, the input parameter may not be limited to the first key, or the first key and the second information, and may further include another input parameter. For details, refer to related descriptions of "3. Key derivation method" above. Details are not described herein again.

The second information may include at least one of the following: information about the terminal, information about the first request, information about the first network function, an identifier of the network, and a security parameter of the network. For descriptions of the information about the terminal, the information about the first request, the information about the first network function, and the security parameter of the network, refer to the related descriptions in S601. Details are not described herein again. The second information may be carried in the first request. In other words, the first network function may obtain the second information based on the received first request. Alternatively, the second information may be locally preconfigured or preset in the first network function according to a protocol. In other words, the first network function may locally obtain the second information. This is not limited in this embodiment of this application. It may be understood that the second information is related to the first request. To be specific, when the first request is a service request, the first information may be at least one of the following: information about the terminal, information about the first request, and information about the first network function. When the first request is an access request, the first information may be at least one of the following: information about the terminal, an identifier of the network, and a security parameter of the network. In addition, generally, the second information and the first information are different information, but the second information and the first information may alternatively be same information. For example, both the first information and the second information are the security parameter of the network.

In a possible implementation, the first network function may determine a third key of the first network function based on the first key and the information about the first request; and determine the security key based on the third key. It should be understood that the third key is used for obtaining the security key, and the third key is a key derived based on the first key and the information about the first request.

The first request may be a service request, and the information about the first request may be specific identification information of the service request. For example, when the service request is a session establishment request, specific identification information of the session establishment request may be a session identifier. The first network function may determine each service of the terminal based on the information about the service request.

For example, the first network function is an SMF, the service request is a session establishment request, and specific identification information of the session establishment request is an ID #1. The first network function may determine, based on the session establishment request, that a session service provided by the first network function for the terminal is a session #1. A session establishment request that carries specific identification information and that is further received by the SMF is a session establishment request with an ID #2. The first network function may determine, based on the session establishment request, that a session service provided by the first network function for the terminal is a session #2. In other words, the session #2 is different from the session #1. In other words, the terminal may distinguish between different sessions with the terminal based on the specific identification information of the session establishment request.

The third key is used for obtaining the security key, and the third key is a key derived based on the first key and the information about the first request. In other words, the third key is a key derived based on a service granularity. In other words, when there are a plurality of services between the first network function and the terminal, third keys corresponding to all of the plurality of services are different. In other words, security keys corresponding to all of the plurality of services are different.

After obtaining the first key and the information about the first request, the first network function may use the first key and the information about the first request as input parameters to determine the third key. Certainly, the input parameter may not be limited to the first key, or the first key and the information about the first request, and may further include another input parameter. For details, refer to related descriptions of "3. Key derivation method" above. Details are not described herein again.

After obtaining the third key, the first network function may use the third key as an input parameter to determine the security key, or may use the third key and the second information as input parameters to determine the security key. For description of the second information, refer to the foregoing related descriptions. Details are not described herein again. Certainly, the input parameter may not be limited to the first key, or the first key and the information about the first request, and may further include another input parameter. For details, refer to related descriptions of "3. Key derivation method" above. Details are not described herein again.

In a possible design solution, after the first network function determines the security key, the method may further include: The first network function may send a first message to the terminal. Correspondingly, the terminal receives the first message from the first network function.

The first message may include information indicating the key of the first network function. In other words, the information may represent that the first network function has determined the security key (denoted as a security key #1) used for establishing the security connection between the terminal and the first network function. After receiving the first message, the terminal may start to perform key derivation, to obtain the security key (the security key #2) used for establishing the security connection between the terminal and the first network function. For a key derivation principle of the terminal, refer to the foregoing key derivation procedure or a principle in the conventional technologies. Details are not described herein again.

It may be understood that the security key #1 and the security key #2 are a key pair, and the key pair may be used by a receive end and a transmit end. For example, the transmit end encrypts a plaintext by using the security key #1 to obtain a ciphertext, and sends the ciphertext to the receive end. When receiving the ciphertext, the receive end may decrypt the ciphertext by using the security key #2 to obtain the plaintext.

In a possible implementation, the first message may further include information indicating an encryption algorithm, and the encryption algorithm is an algorithm used by the terminal for encryption. For example, after deriving the key of the first network, the terminal may determine, based on the key of the first network and the encryption algorithm, the security key #2 corresponding to the security key #1.

Further, the method may further include: The terminal may determine, based on the information about the key of the first network function and the information indicating the encryption algorithm, the security key used for establishing the security connection between the terminal and the first network function. For example, the terminal may first start to perform key derivation based on the information about the key of the first network function. After deriving the key of the first network function, the terminal may determine the security key (the security key #2) based on the encryption indication algorithm and the key of the first network function.

In a possible implementation, the terminal sends a second message to the first network function. Correspondingly, the first network function receives the second message from the terminal. The second message indicates whether the terminal determines the security key. The first network function may determine a subsequent operation of the first network function based on the second message.

In conclusion, when the terminal may directly communicate with the first network function in the network, after the first network function receives the first request initiated by the terminal, the security connection may be established between the first network function and the terminal by determining the security key. In other words, a message between the first network function and the terminal may be protected by using the security key. In this way, communication security between the first network function and the terminal can be ensured, thereby meeting a future communication requirement.

Scenario 1:

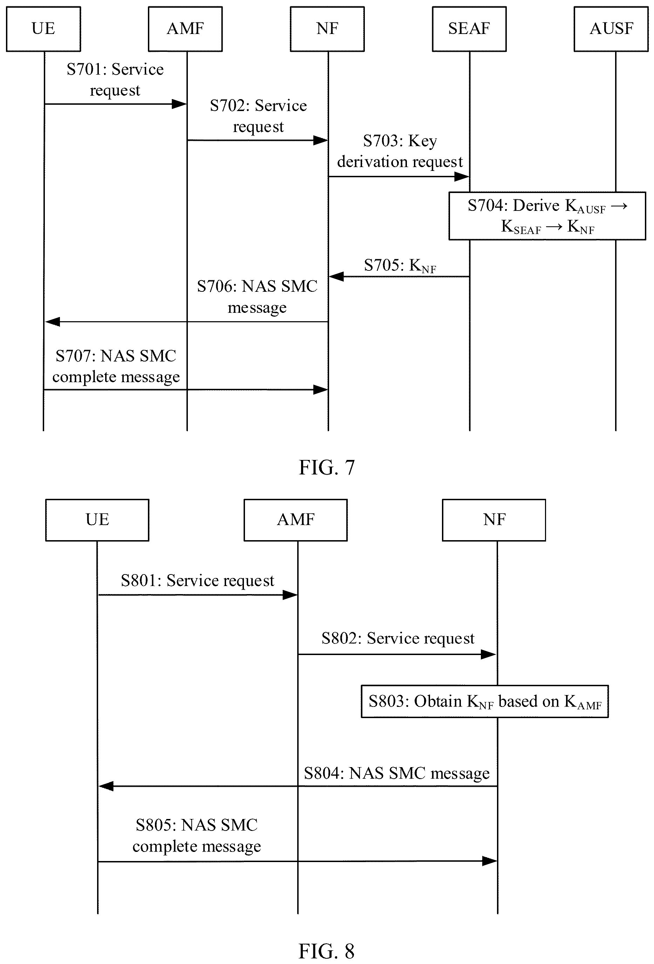

FIG. 7 is a schematic flowchart 2 of a security key determining method according to an embodiment of this application. The method is applicable to the foregoing communication system, and mainly relates to communication between UE (the foregoing terminal), an AMF (the foregoing second network function), an NF (the foregoing first network function), an SEAF (the foregoing third network function), and an AUSF.

As shown in FIG. 7, the method may include the following steps.

S701: The UE sends a service request to the AMF. Correspondingly, the AMF receives the service request from the UE.

S702: The AMF sends the service request to the NF. Correspondingly, the NF receives the service request from the AMF.

S703: The NF sends a key derivation request to the SEAF. Correspondingly, the SEAF receives the key derivation request from the NF.

The key derivation request is the second request in S602.

S704: The SEAF obtains a key $K_{NF}$ of the NF based on $K_{SEAF}$.

The SEAF may obtain $K_{SEAF}$ from the AUSF by sending an authentication request message. For specific implementation principles of S701 to S704, refer to related descriptions of S601 and S602. Details are not described again.

S705: The SEAF sends $K_{NF}$ to the NF. Correspondingly, the NF receives $K_{NF}$ from the SEAF.

After receiving $K_{NF}$, the NF may determine a security key based on $K_{NF}$, or may determine a security key based on $K_{NF}$ and second information. For a specific implementation principle of determining the security key by the NF, refer to the related descriptions of S603. Details are not described herein again.

It may be understood that the NF may perform S706 after determining the security key based on $K_{NF}$.

S706: The NF sends a NAS SMC message to the UE. Correspondingly, the UE receives the NAS SMC message from the NF.

The NAS SMC message is the first message in S603.

S707: The UE sends a NAS SMC complete (complete) message to the NF. Correspondingly, the NF receives the NAS SMC complete message from the UE.

The NAS SMC complete message is the second message in S603. For specific implementation principles of S706 and S707, refer to the related descriptions of S603. Details are not described again.

Scenario 2:

FIG. 8 is a schematic flowchart 3 of a security key determining method according to an embodiment of this application. The method is applicable to the foregoing communication system, and mainly relates to communication between UE (the foregoing terminal), an AMF (the foregoing second network function), and an NF (the foregoing first network function).

As shown in FIG. 8, the method may include the following steps.

S801: The UE sends a service request to the AMF. Correspondingly, the AMF receives the service request from the UE.

S802: The AMF sends the service request to the NF. Correspondingly, the NF receives the service request from the AMF.

The service request carries $K_{AMF}$. In other words, in this case, $K_{AMF}$ is preconfigured in the AMF.

S803: The NF obtains a key $K_{NF}$ of the NF based on $K_{AMF}$.

After receiving $K_{NF}$, the NF may determine a security key based on $K_{NF}$, or may determine a security key based on $K_{NF}$ and second information.

It may be understood that the NF may perform S804 after determining the security key based on $K_{NF}$.

S804: The NF sends a NAS SMC message to the UE. Correspondingly, the UE receives the NAS SMC message from the NF.

The NAS SMC message is the first message in S603.

S805: The UE sends a NAS SMC complete message to the NF. Correspondingly, the NF receives the NAS SMC complete message from the UE.

The NAS SMC complete message is the second message in S603.

For specific implementation principles of S801 to S805, refer to related descriptions of S601 to S603. Details are not described again.

Scenario 3:

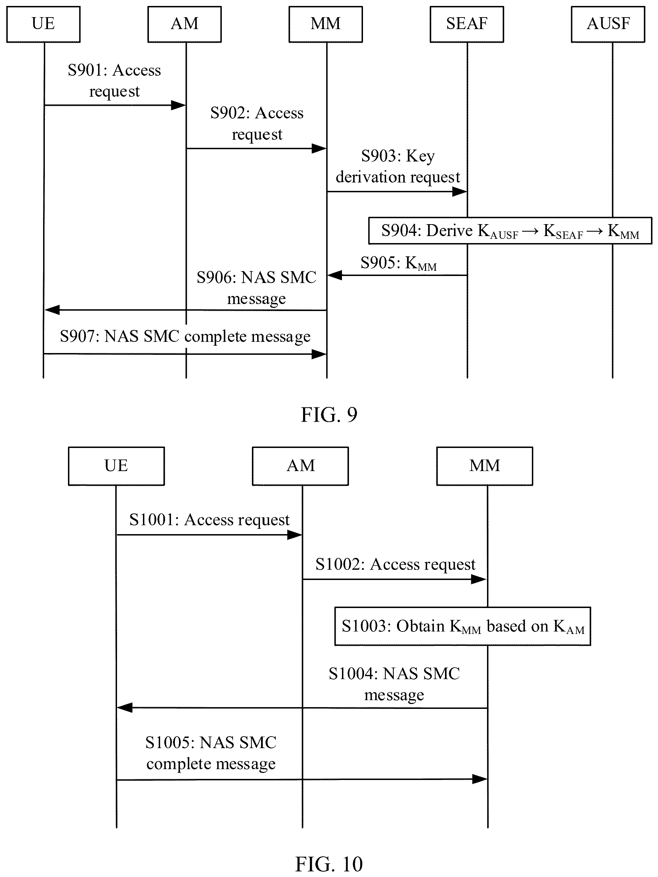

FIG. 9 is a schematic flowchart 4 of a security key determining method according to an embodiment of this application. The method is applicable to the foregoing communication system, and mainly relates to communication between UE (the foregoing terminal), AM (the foregoing second network function), MM (the foregoing first network function), an SEAF (the foregoing third network function), and an AUSF.

As shown in FIG. 9, the method may include the following steps.

S901: The UE sends an access request to the AM. Correspondingly, the AM receives the access request from the UE.

S902: The AMF sends the access request to the MM. Correspondingly, the MM receives the access request from the AMF.

S903: The MM sends a key derivation request to the SEAF. Correspondingly, the SEAF receives the key derivation request from the MM.

The key derivation request is the second request in S602.

S904: The SEAF obtains a key $K_{MM}$ of the MM based on $K_{SEAF}$.

The SEAF may obtain $K_{SEAF}$ from the AUSF by sending an authentication request message. For specific implementation principles of S901 to S904, refer to related descriptions of S601 and S602. Details are not described again.

S905: The SEAF sends $K_{MM}$ to the MM. Correspondingly, the MM receives $K_{MM}$ from the SEAF.

After obtaining $K_{MM}$, the MM may determine a security key based on $K_{MM}$, or may determine a security key based on $K_{MM}$ and second information. For a specific implementation principle of determining the security key by the MM, refer to the related descriptions of S603. Details are not described herein again.

It may be understood that the MM may perform S906 after determining the security key.

S906: The MM sends a NAS SMC message to the UE. Correspondingly, the UE receives the NAS SMC message from the MM.

The NAS SMC message is the first message in S603.

S907: The UE sends a NAS SMC complete message to the MM. Correspondingly, the MM receives the NAS SMC complete message from the UE.

The NAS SMC complete message is the second message in S603. For specific implementation principles of S906 and S907, refer to the related descriptions of S603. Details are not described again.

Scenario 4:

FIG. 10 is a schematic flowchart 5 of a security key determining method according to an embodiment of this application. The method is applicable to the foregoing communication system, and mainly relates to communication between UE (the foregoing terminal), AM (the foregoing second network function), and MM (the foregoing first network function).

As shown in FIG. 10, the method may include the following steps.

S1001: The UE sends an access request to the AM. Correspondingly, the AM receives the access request from the UE.

S1002: The AM sends the access request to the MM. Correspondingly, the MM receives the access request from the AM.

The access request carries a key $K_{AM}$ of the AM, and $K_{AM}$ is preconfigured in the AMF.

S1003: The MM obtains a key $K_{MM}$ of the MM based on $K_{AM}$.

After obtaining $K_{MM}$, the MM may determine a security key based on $K_{MM}$, or may determine a security key based on $K_{MM}$ and second information.

It may be understood that the MM may perform S1004 after determining the security key.

S1004: The MM sends a NAS SMC message to the UE. Correspondingly, the UE receives the NAS SMC message from the MM.

The NAS SMC message is the first message in S603.

S1005: The UE sends a NAS SMC complete message to the MM. Correspondingly, the MM receives the NAS SMC complete message from the UE.

The NAS SMC complete message is the second message in S603.

For specific implementation principles of S1001 to S1005, refer to related descriptions of S601 to S603. Details are not described again.

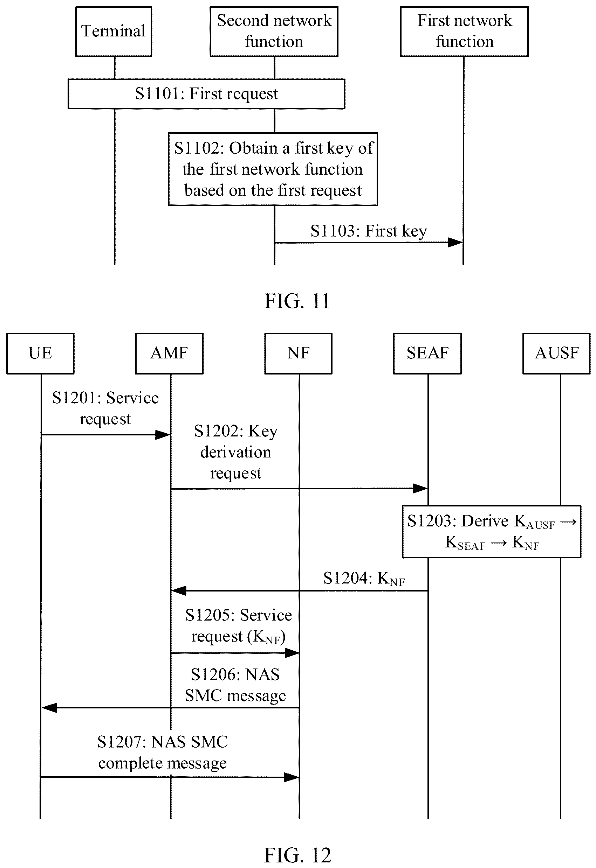

FIG. 11 is a schematic flowchart 6 of a security key determining method according to an embodiment of this application. The method is mainly applicable to communication between a terminal and a first network function in the foregoing communication system.

As shown in FIG. 11, a procedure of the method is as follows:

S1101: A terminal sends a first request to a second network function. Correspondingly, the second network function receives the first request from the terminal.

For descriptions of the first request, refer to the related descriptions of S601. Details are not described herein again.

The terminal may send, to the second network function based on a current requirement of the terminal, a first request corresponding to the requirement. For example, when the terminal has a service requirement, the terminal may send a service request to the second network function; and correspondingly, the second network function receives the service request from the terminal. For another example, when the terminal has a network access requirement, the terminal may send an access request to the second network function; and correspondingly, the second network function receives the access request from the terminal. For related descriptions, refer to the related descriptions of S601. Details are not described herein again.

S1102: The second network function obtains a first key of a first network function based on the first request.

The first key may be used for determining a security key. For descriptions of the security key, refer to the related descriptions of S602. Details are not described herein again.

The second network function may obtain the first key in a plurality of manners, for example, obtain the first key from another network function, or obtain the first key locally. The manners are separately described below.

Manner 1: The second network function obtains the first key from the another network function.

(1) The second network function may send a second request to a third network function based on the first request. Correspondingly, the third network function receives the second request from the second network function.

The second request is similar to the second request in S602. A difference lies in that the second request in S602 is a request sent by the first network function to the third network function, and the second request in S1102 is a request sent by the second network function to the third network function. For a same part, refer to the related descriptions of S602. Details are not described herein again.

Optionally, the second request may further carry first information. For descriptions of the first information, refer to the related descriptions of S602. Details are not described herein again.

(2) The third network function may obtain the first key of the first network function based on the second request. For a specific implementation principle, refer to the related descriptions of S602. Details are not described herein again.

(3) The third network function may send a first response to the second network function. Correspondingly, the second network function receives the first response from the third network function. For descriptions of the first response, refer to the related descriptions of S602. Details are not described herein again.

Manner 2: The second network function locally obtains the first key.

For example, the second network function may obtain a key of the second network function based on the first request, to obtain the first key based on the key of the second network function.

The key of the second network function may be $K_{AMF}$ or $K_{AM}$. For a manner of obtaining $K_{AMF}$ or $K_{AM}$, refer to the related descriptions of S602. Details are not described herein again.

After obtaining the key of the second network function, the second network function may use the key of the second network function as an input parameter to determine the first key, or may use the key of the second network function and first information as input parameters to determine the first key. For descriptions of the first information, refer to the related descriptions of S602. Details are not described again. Certainly, the input parameter may not be limited to the key of the second network function, or the key of the second network function and the first information, and may further include another input parameter. For details, refer to related descriptions of "3. Key derivation method" above. Details are not described herein again.

S1103: The second network function sends the first key to the first network function. Correspondingly, the first network function receives the first key from the second network function.

The first key may be carried in the first request. In other words, when forwarding the first request to the first network function, the second network function may add the first key to the first request. In this way, the first network function provides a corresponding service for the terminal based on the first request, and determines the security key based on the first key. For example, the second network function may send, to the first network function, the service request carrying the first key, or the second network function may send, to the first network function, the access request carrying the first key.

After receiving the first key, the first network function may determine the security key based on the first key, and a security connection may be established between the first network function and the terminal based on the security key. For a specific implementation principle, refer to the related descriptions of S603. Details are not described herein again.

It can be learned that a difference between this embodiment of this application and the method in FIG. 6 lies in that the second network function triggers obtaining of the first key in this embodiment of this application, and the first network function triggers obtaining of the first key in the method (S601 to S603) in FIG. 6. Actions of triggering obtaining of the first key in this embodiment and the method in FIG. 6 are similar. Mutual reference may be made for same parts.

In conclusion, when the terminal may directly communicate with the first network function in the network, and the terminal initiates a first request corresponding to a network function, the second network function may obtain, based on the first request, the security key used for establishing the security connection between the first network function and the terminal, so that the security connection is established between the first network function and the terminal based on the security key. In other words, a message between the first network function and the terminal may be protected by using the security key. In this way, communication security between the first network function and the terminal can be ensured, thereby meeting a future communication requirement.

Scenario 5:

FIG. 12 is a schematic flowchart 7 of a security key determining method according to an embodiment of this application. The method is applicable to the foregoing communication system, and mainly relates to communication between UE (the foregoing terminal), an AMF (the foregoing second network function), an NF (the foregoing first network function), an SEAF (the foregoing third network function), and an AUSF.

As shown in FIG. 12, the method may include the following steps.

S1201: The UE sends a service request to the AMF. Correspondingly, the AMF receives the service request from the UE.

S1202: The AMF sends a key derivation request to the SEAF. Correspondingly, the SEAF receives the key derivation request from the AMF.

The key derivation request is the second request in S1102, or the key derivation request may be an authentication request of the terminal.

S1203: The SEAF obtains a key $K_{NF}$ of the NF based on $K_{SEAF}$.

S1204: The SEAF sends $K_{NF}$ to the AMF. Correspondingly, the AMF receives $K_{NF}$ from the SEAF.

For specific implementation principles of S1201 to S1204, refer to related descriptions of S1101 and S1102. Details are not described again.

S1205: The AMF sends the service request to the NF. Correspondingly, the NF receives the service request from the AMF.

The service request carries $K_{NF}$. After obtaining $K_{NF}$, the NF may determine a security key based on $K_{NF}$, or may determine a security key based on $K_{NF}$ and second information. For a specific implementation principle of determining the security key by the NF, refer to the related descriptions of S1103. Details are not described herein again.

It may be understood that the NF may perform S1206 after determining the security key based on $K_{NF}$.

S1206: The NF sends a NAS SMC message to the UE. Correspondingly, the UE receives the NAS SMC message from the NF.

The NAS SMC message is the first message in S603.

S1207: The UE sends a NAS SMC complete message (the second message) to the NF. Correspondingly, the NF receives the NAS SMC complete message from the UE.

The NAS SMC complete message is the second message in S603. For specific implementation principles of S1206 and S 1207, refer to the related descriptions of S1103. Details are not described again.

Scenario 6:

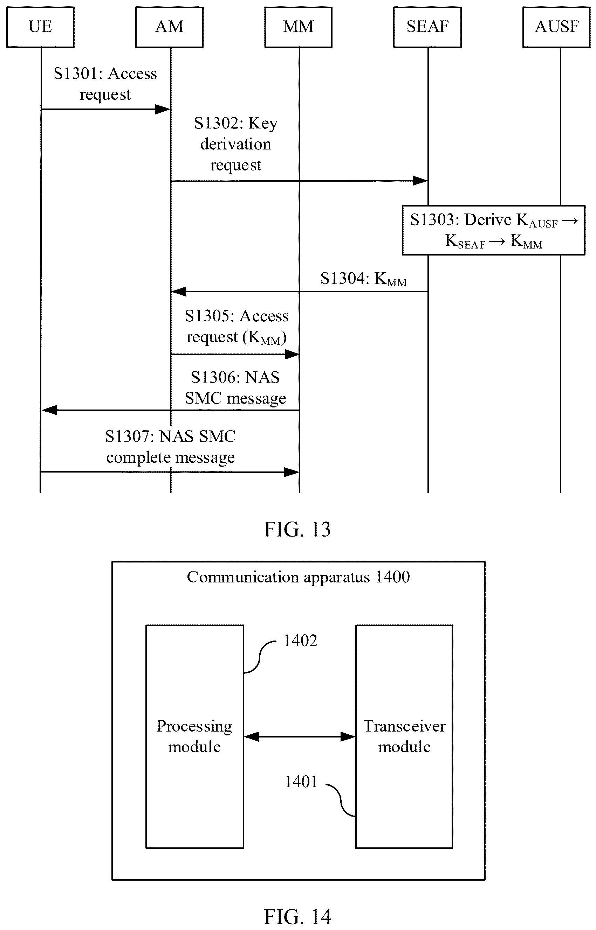

FIG. 13 is a schematic flowchart 8 of a security key determining method according to an embodiment of this application. The method is applicable to the foregoing communication system, and mainly relates to communication between UE (the foregoing terminal), AM (the foregoing second network function), MM (the foregoing first network function), an SEAF (the foregoing third network function), and an AUSF.

S1301: The UE sends an access request to the AM. Correspondingly, the AM receives the access request from the UE.

S1302: The AM sends a key derivation request to the SEAF. Correspondingly, the SEAF receives the key derivation request from the AM.

S1303: The SEAF obtains a key $K_{MM}$ of the MM based on $K_{SEAF}$.

S1304: The SEAF sends $K_{MM}$ to the AM. Correspondingly, the AM receives $K_{MM}$ from the SEAF.

S1305: The AM sends the access request to the MM. Correspondingly, the MM receives the access request from the AMF.

The access request may carry $K_{MM}$. After receiving $K_{MM}$, the MM may determine a security key based on $K_{MM}$, or may determine a security key based on $K_{MM}$ and second information. For a specific implementation principle of determining the security key by the MM, refer to the related descriptions of S1103. Details are not described herein again.

It may be understood that the MM may perform S1306 after determining the security key based on $K_{MM}$.

S1306: The MM sends a NAS SMC message to the UE. Correspondingly, the UE receives the NAS SMC message from the MM.

The NAS SMC message is the first message in S603.

S1307: The UE sends a NAS SMC complete message to the MM. Correspondingly, the MM receives the NAS SMC complete message from the UE.

The NAS SMC complete message is the second message in S603.

For specific implementation principles of S1301 to S1307, refer to related descriptions of S1101 to S1103. Details are not described again.

It may be understood that the scenario 1 to the scenario 6 are different implementations, and specific implementations are not limited. In addition, there may be another implementation. For example, the MM in the scenario 3, the scenario 4, and the scenario 6 may be replaced with proxy, LB, or a network access ingress function of another subnet. Correspondingly, when the third network function is proxy, the first key may be $K_{Proxy}$ or a key $K_{net}$ at a subnet granularity, and $K_{net}$ indicates a key used by a specific subnet; or when the third network function is LB, the first key may be $K_{LB}$ or Knet. For another example, after receiving the service request, the AMF may automatically generate $K_{NF}$, and add $K_{NF}$ to the service request sent to the NF; or after receiving the access request, the AM may automatically generate $K_{MM}$, and add $K_{MM}$ to the access request sent to the MM.

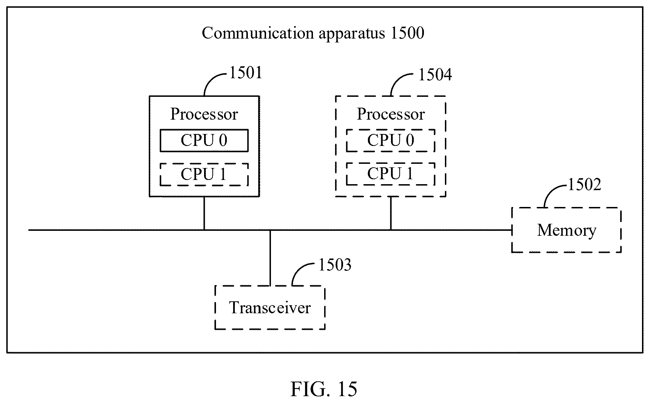

The foregoing describes in detail the security key determining method provided in embodiments of this application with reference to FIG. 6 to FIG. 13. With reference to FIG. 14 and FIG. 15, the following describes in detail a communication apparatus configured to perform the security key determining method provided in embodiments of this application.

For example, FIG. 14 is a diagram 1 of a structure of a communication apparatus according to an embodiment of this application. As shown in FIG. 14, the communication apparatus 1400 includes a transceiver module 1401 and a processing module 1402. For ease of description, FIG. 14 shows only main components of the communication apparatus.

In some embodiments, the communication apparatus 1400 may be used in the communication system shown in FIG. 4, and perform functions of the first network function in the security key determining method shown in FIG. 6 to FIG. 13.

The transceiver module 1401 is configured to receive a first request; the processing module 1402 is configured to obtain a first key of a first network function based on the first request; and the processing module 1402 is further configured to determine a security key based on the first key. The first request is used by a terminal to request establishment of a service with the first network function, or the first request is used by the terminal to request access to a network. The first network function is a network function other than a second network function in the network. The second network function is used for access management of the terminal. The security key is used for establishing a security connection between the terminal and the first network function.

In a possible design solution, the processing module 1402 is specifically configured to generate a second request based on the first request. The transceiver module 1401 is further configured to: send the second request to a third network function; and receive a first response from the third network function. The third network function is configured to determine a key of the first network function. The second request is used to request the third network function to derive the key of the first network function. The first response carries the first key. The first response is a response message for the second request.

In a possible design solution, the processing module 1402 is specifically configured to: obtain a second key based on the first request; and determine the first key based on the second key. The second key is a key of the third network function. The key of the third network function is used for determining the key of the first network function.

Optionally, the third network function is any one of the following: an access and mobility management function AMF, access management AM, and a security anchor function SEAF.

Optionally, the processing module 1402 is specifically configured to determine the first key based on the second key and first information. The first information is at least one of the following: information about the terminal, information about the first request, information about the first network function, an identifier of the network, and a security parameter of the network.

Further, the second key is carried in the first request, or the second key is preconfigured locally in the first network function.

In a possible design solution, the processing module 1402 is specifically configured to determine the security key based on the first key and second information. The second information is at least one of the following: information about the terminal, information about the first request, information about the first network function, an identifier of the network, and a security parameter of the network. In this way, security of the security key can be improved based on the second information, to further ensure communication security between the terminal and the first network function.

In a possible design solution, the processing module 1402 is specifically configured to: determine a third key of the first network function based on the first key and the information about the first request; and determine the security key based on the third key.

Optionally, the processing module 1402 is specifically configured to determine the security key based on the third key and second information. The second information is at least one of the following: information about the terminal, information about the first request, information about the first network function, an identifier of the network, and a security parameter of the network.

In an optional design solution, the transceiver module 1401 is further configured to send a first message to the terminal. The first message includes information indicating the key of the first network function.

Optionally, the first message further includes information indicating an encryption algorithm, and the encryption algorithm is an algorithm used by the terminal for encryption.

Optionally, the transceiver module 1401 is further configured to receive a second message from the terminal. The second message indicates whether the terminal determines the security key.

In a possible design solution, the second network function is an AMF or AM.

Optionally, when the second network function is an AMF, the first network function is at least one of the following: a session management function SMF, a policy control function PCF, a location management function LMF, a network data analytics function NWDAF, and a short message service function SMSF.

Optionally, when the second network function is AM, the first network function is at least one of the following: mobility management MM, proxy, and load balance LB.

Optionally, the transceiver module 1401 may include a receiving module and a sending module (not shown in FIG. 14). The transceiver module is configured to implement a sending function and a receiving function of the communication apparatus 1400. Optionally, the communication apparatus 1400 may further include a storage module (not shown in FIG. 14). The storage module stores a program or instructions. When the processing module 1402 executes the program or the instructions, the communication apparatus 1400 may perform the functions of the first network function in the communication method shown in any one of FIG. 6 to FIG. 13.

It should be understood that the processing module 1402 in the communication apparatus 1400 may be implemented by a processor or a processor-related circuit component, and may be a processor or a processing unit; and the transceiver module 1401 may be implemented by a transceiver or a transceiver-related circuit component, and may be a transceiver or a transceiver unit.

It should be noted that the communication apparatus 1400 may be a terminal device or a network device, may be a chip (system) or another part or component that may be disposed in a terminal device or a network device, or may be an apparatus including a terminal device or a network device. This is not limited in this application.

In addition, for technical effects of the communication apparatus 1400, refer to the technical effects of the security key determining method shown in any one of FIG. 6 to FIG. 13. Details are not described herein again.

In some other embodiments, the communication apparatus 1400 may be used in the communication system shown in FIG. 4, and perform functions of the second network function in the communication method shown in FIG. 6 to FIG. 13.

The transceiver module 1401 is configured to receive a first request; the processing module 1402 is configured to obtain a first key of a first network function based on the first request; and the processing module 1402 is further configured to send the first key to the first network function. The second network function is used for access management of a terminal. The first request is used by the terminal to request establishment of a service with the first network function, or the first request is used by the terminal to request access to a network. The first network function is a network function other than the second network function in a network. The first key is used for determining a security key used for establishing a security connection between the terminal and the first network function.

In a possible design solution, the processing module 1402 is specifically configured to generate a second request based on the first request. The transceiver module 1401 is further configured to: send the second request to a third network function; and receive a first response from the third network function. The third network function is configured to determine a key of the first network function. The second request is used to request the third network function to derive the key of the first network function. The first response carries the first key. The first response is a response message for the second request.

In a possible design solution, the processing module 1402 is specifically configured to determine the first key based on a key of the second network function.

Optionally, the processing module 1402 is specifically configured to determine the first key based on the key of the second network function and first information. The first information is at least one of the following: information about the terminal, information about the first request, information about the first network function, an identifier of the network, and a security parameter of the network.

In a possible design solution, the first request is a service request, the second network function receives the first request, and the transceiver module 1401 is specifically configured to: receive the service request from the terminal, where the service request is used by the terminal to request establishment of a service with the first network function; and send, to the first network function, the service request carrying the first key.

In a possible design solution, the first request is an access request, the second network function receives the first request, and the transceiver module 1401 is specifically configured to: receive the access request from the terminal, where the access request is used by the terminal to request access to the network; and send, to the first network function, the access request carrying the first key.

In a possible design solution, the second network function is an access and mobility management function AMF or access management AM.

Optionally, when the second network function is an AMF, the first network function is at least one of the following: a session management function SMF, a policy control function PCF, a location management function LMF, a network data analytics function NWDAF, and a short message service function SMSF.

Optionally, when the second network function is AM, the first network function is at least one of the following: mobility management MM, proxy, and load balance LB.

Optionally, the transceiver module 1401 may include a receiving module and a sending module (not shown in FIG. 14). The transceiver module is configured to implement a sending function and a receiving function of the communication apparatus 1400. Optionally, the communication apparatus 1400 may further include a storage module (not shown in FIG. 14). The storage module stores a program or instructions. When the processing module 1402 executes the program or the instructions, the communication apparatus 1400 may perform the functions of the first network function in the communication method shown in any one of FIG. 6 to FIG. 13.

It should be understood that the processing module 1402 in the communication apparatus 1400 may be implemented by a processor or a processor-related circuit component, and may be a processor or a processing unit; and the transceiver module 1401 may be implemented by a transceiver or a transceiver-related circuit component, and may be a transceiver or a transceiver unit.

It should be noted that the communication apparatus 1400 may be a terminal device or a network device, may be a chip (system) or another part or component that may be disposed in a terminal device or a network device, or may be an apparatus including a terminal device or a network device. This is not limited in this application.

In addition, for technical effects of the communication apparatus 1400, refer to the technical effects of the security key determining method shown in any one of FIG. 6 to FIG. 13. Details are not described herein again.

In some other embodiments, the communication apparatus 1400 may be used in the communication system shown in FIG. 4, and perform functions of the third network function in the communication method shown in FIG. 6 to FIG. 13.

For example, the transceiver module 1401 is configured to receive a second request; the processing module 1402 is configured to obtain a first key of a first network function based on the second request; and the transceiver module 1401 is further configured to send a first response. The second request is used to request the third network function to derive a key of the first network function. The key of the first network function is used for determining a security key used for establishing a security connection between a terminal and the first network function. The first network function is a network function other than a second network function in a network. The second network function is used for access management of the terminal. The first response carries the first key. The first response is a response message for the second request.

In a possible design solution, the transceiver module 1401 is specifically configured to: receive the second request from the second network function; and send the first response to the second network function.

In a possible design solution, the transceiver module 1401 is specifically configured to: receive the second request from the first network function; and send the first response to the first network function.

In a possible design solution, the processing module 1402 is specifically configured to determine the first key based on the second key. The second key is a key of the third network function. The key of the third network function is used for determining the key of the first network function.

Optionally, the processing module 1402 is specifically configured to determine the first key based on the second key and first information. The first information is at least one of the following: information about the terminal, information about the first request, information about the first network function, an identifier of the network, and a security parameter of the network.

In a possible design solution, the second network function is an access and mobility management function AMF or access management AM.

Optionally, when the second network function is an AMF, the first network function is at least one of the following: a session management function SMF, a policy control function PCF, a location management function LMF, a network data analytics function NWDAF, and a short message service function SMSF.

Optionally, when the second network function is AM, the first network function is at least one of the following: mobility management MM, proxy, and load balance LB.

Optionally, the transceiver module 1401 may include a receiving module and a sending module (not shown in FIG. 14). The transceiver module is configured to implement a sending function and a receiving function of the communication apparatus 1400. Optionally, the communication apparatus 1400 may further include a storage module (not shown in FIG. 14). The storage module stores a program or instructions. When the processing module 1402 executes the program or the instructions, the communication apparatus 1400 may perform the functions of the first network function in the communication method shown in any one of FIG. 6 to FIG. 13.

It should be understood that the processing module 1402 in the communication apparatus 1400 may be implemented by a processor or a processor-related circuit component, and may be a processor or a processing unit; and the transceiver module 1401 may be implemented by a transceiver or a transceiver-related circuit component, and may be a transceiver or a transceiver unit.

It should be noted that the communication apparatus 1400 may be a terminal device or a network device, may be a chip (system) or another part or component that may be disposed in a terminal device or a network device, or may be an apparatus including a terminal device or a network device. This is not limited in this application.

In addition, for technical effects of the communication apparatus 1400, refer to the technical effects of the security key determining method shown in any one of FIG. 6 to FIG. 13. Details are not described herein again.

In some other embodiments, the communication apparatus 1400 may be used in the communication system shown in FIG. 4, and perform functions of the terminal in the communication method shown in FIG. 6 to FIG. 13.

The transceiver module 1401 is configured to receive a first message from a first network function; the processing module 1402 is configured to generate a second message; and the transceiver module 1401 is further configured to send the second message to the first network function. The first message includes information indicating a key of the first network function. The first network function is a network function other than a second network function in a network. The second network function is used for access management of the terminal. The second message indicates whether the terminal determines a security key used for establishing a security connection between the terminal and the first network function.

In a possible design solution, the first message further includes information indicating an encryption algorithm. The encryption algorithm is an algorithm used by the terminal for encryption. The processing module 1402 is further configured to determine the security key based on the information about the key of the first network function and the information indicating the encryption algorithm.

In a possible design solution, before receiving the first message from the first network function, the transceiver module 1401 is further configured to send a first request to the second network function, where the first request is used by the terminal to request establishment of a service with the first network function, or the first request is used by the terminal to request access to the network.

In a possible design solution, the second network function is an access and mobility management function AMF or access management AM.

Optionally, when the second network function is an AMF, the first network function is at least one of the following: a session management function SMF, a policy control function PCF, a location management function LMF, a network data analytics function NWDAF, and a short message service function SMSF.

Optionally, when the second network function is AM, the first network function is at least one of the following: mobility management MM, proxy, and load balance LB.

Optionally, the transceiver module 1401 may include a receiving module and a sending module (not shown in FIG. 14). The transceiver module is configured to implement a sending function and a receiving function of the communication apparatus 1400. Optionally, the communication apparatus 1400 may further include a storage module (not shown in FIG. 14). The storage module stores a program or instructions. When the processing module 1402 executes the program or the instructions, the communication apparatus 1400 may perform the functions of the first network function in the communication method shown in any one of FIG. 6 to FIG. 13.

It should be understood that the processing module 1402 in the communication apparatus 1400 may be implemented by a processor or a processor-related circuit component, and may be a processor or a processing unit; and the transceiver module 1401 may be implemented by a transceiver or a transceiver-related circuit component, and may be a transceiver or a transceiver unit.

It should be noted that the communication apparatus 1400 may be a terminal device or a network device, may be a chip (system) or another part or component that may be disposed in a terminal device or a network device, or may be an apparatus including a terminal device or a network device. This is not limited in this application.

In addition, for technical effects of the communication apparatus 1400, refer to the technical effects of the security key determining method shown in any one of FIG. 6 to FIG. 13. Details are not described herein again.

For example, FIG. 15 is a diagram 2 of a structure of a communication apparatus according to an embodiment of this application. The communication apparatus may be a terminal device or a network device, or may be a chip (system) or another part or component that may be disposed in a terminal device or a network device. As shown in FIG. 15, the communication apparatus 1500 may include a processor 1501. Optionally, the communication apparatus 1500 may further include a memory 1502 and/or a transceiver 1503. The processor 1501 is coupled to the memory 1502 and the transceiver 1503, for example, may be connected to the memory 1502 and the transceiver 1503 through a communication bus.

The parts of the communication apparatus 1500 are described below in detail with reference to FIG. 15.

The processor 1501 is a control center of the communication apparatus 1500, and may be one processor, or may be a collective term of a plurality of processing elements. For example, the processor 1501 is one or more central processing units (central processing units, CPUs), or may be an application-specific integrated circuit (application-specific integrated circuit, ASIC), or may be one or more integrated circuits configured to implement embodiments of this application, for example, one or more microprocessors (digital signal processors, DSPs), or one or more field programmable gate arrays (field programmable gate arrays, FPGAs).

Optionally, the processor 1501 may perform various functions of the communication apparatus 1500 by running or executing a software program stored in the memory 1502 and invoking data stored in the memory 1502.

During specific implementation, in an embodiment, the processor 1501 may include one or more CPUs, for example, a CPU 0 and a CPU 1 shown in FIG. 15.

During specific implementation, in an embodiment, the communication apparatus 1500 may alternatively include a plurality of processors, for example, the processor 1501 and a processor 1504 shown in FIG. 15. Each of the processors may be a single-core processor (single-CPU), or may be a multi-core processor (multi-CPU). The processor herein may be one or more devices, circuits, and/or processing cores configured to process data (for example, computer program instructions).

The memory 1502 is configured to store the software program for performing the solutions in this application, and the processor 1501 controls execution of the software program. For a specific implementation, refer to the foregoing method embodiments. Details are not described herein again.

Optionally, the memory 1502 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory 1502 may be integrated with the processor 1501, or may exist separately, and is coupled to the processor 1501 through an interface circuit port (not shown in FIG. 15) of the communication apparatus 1500. This is not specifically limited in this embodiment of this application.

The transceiver 1503 is configured to communicate with another communication apparatus. For example, the communication apparatus 1500 is a terminal device, and the transceiver 1503 may be configured to communicate with a network device or communicate with another terminal device. For another example, the communication apparatus 1500 is a network device, and the transceiver 1503 may be configured to communicate with a terminal device or communicate with another network device.

Optionally, the transceiver 1503 may include a receiver and a transmitter (not separately shown in FIG. 15). The receiver is configured to implement a receiving function, and the transmitter is configured to implement a sending function.

Optionally, the transceiver 1503 may be integrated with the processor 1501, or may exist separately, and is coupled to the processor 1501 through an interface circuit (not shown in FIG. 15) of the communication apparatus 1500. This is not specifically limited in this embodiment of this application.

It should be noted that the structure of the communication apparatus 1500 shown in FIG. 15 does not constitute a limitation on the communication apparatus. An actual communication apparatus may include more or fewer components than those shown in the figure, or combine some components, or have different component arrangements.

In addition, for technical effects of the communication apparatus 1500, refer to technical effects of the communication method in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through an example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or a part of the foregoing embodiments may be implemented using software, hardware (for example, a circuit), firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

An embodiment of this application further provides a communication chip. The communication chip stores instructions. When the communication chip runs on a communication device, the method provided in embodiments of this application is implemented.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including a singular item (piece) or any combination of plural items (pieces). For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be or may not be physically separate, and parts displayed as units may be or may not be physical units, and may be at one location, or may be distributed on a plurality of network elements. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A security key determining method, wherein the method comprises:

   receiving, by a first network function, a first request, wherein the first request is used by a terminal to request establishment of a service with the first network function, or the first request is used by the terminal to request access to a network, the first network function is a network function other than a second network function in the network, and the second network function is used for access management of the terminal;
   obtaining, by the first network function, a first key of the first network function based on the first request; and
   determining, by the first network function, a security key based on the first key, wherein the security key is used for establishing a security connection between the terminal and the first network function.

2. The method according to claim 1, wherein obtaining, by the first network function, the first key of the first network function based on the first request comprises:

   sending, by the first network function, a second request to a third network function based on the first request, wherein the third network function is configured to determine a key of the first network function, and the second request is used to request the third network function to derive the key of the first network function; and
   receiving, by the first network function, a first response from the third network function, wherein the first response carries the first key, and the first response is a response message for the second request.

3. The method according to claim 1, wherein obtaining, by the first network function, the first key of the first network function based on the first request comprises:

   obtaining, by the first network function, a second key based on the first request, wherein the second key is a key of a third network function, and the key of the third network function is used for determining a key of the first network function; and
   determining, by the first network function, the first key based on the second key.

4. The method according to claim 3, wherein determining, by the first network function, the first key based on the second key comprises:
   determining, by the first network function, the first key based on the second key and first information, wherein the first information is at least one of the following: information about the terminal, information about the first request, information about the first network function, an identifier of the network, and a security parameter of the network.

5. The method according to any one of claims 1 to 4, wherein determining, by the first network function, the security key based on the first key comprises:

   determining, by the first network function, a third key of the first network function based on the first key and the information about the first request; and
   determining, by the first network function, the security key based on the third key.

6. The method according to any one of claims 1 to 5, wherein the method further comprises:
   sending, by the first network function, a first message to the terminal, wherein the first message comprises information indicating the key of the first network function.

7. A security key determining method, wherein the method comprises:

    receiving, by a second network function, a first request, wherein the second network function is used for access management of a terminal, the first request is used by the terminal to request establishment of a service with a first network function, or the first request is used by the terminal to request access to a network, and the first network function is a network function other than the second network function in the network;
    obtaining, by the second network function, a first key of the first network function based on the first request, wherein the first key is used for determining a security key used for establishing a security connection between the terminal and the first network function; and
    sending, by the second network function, the first key to the first network function.

8. The method according to claim 7, wherein obtaining, by the second network function, the first key of the first network function based on the first request comprises:

    sending, by the second network function, a second request to a third network function based on the first request, wherein the third network function is configured to determine a key of the first network function, and the second request is used to request the third network function to derive the key of the first network function; and
    receiving, by the second network function, a first response from the third network function, wherein the first response carries the first key, and the first response is a response message for the second request.

9. The method according to claim 7, wherein obtaining, by the second network function, the first key of the first network function based on the first request comprises:
determining, by the second network function, the first key based on a key of the second network function.

10. The method according to claim 9, wherein determining, by the second network function, the first key based on the key of the second network function comprises:
determining, by the second network function, the first key based on the key of the second network function and first information, wherein the first information is at least one of the following: information about the terminal, information about the first request, information about the first network function, an identifier of the network, and a security parameter of the network.

11. A security key determining method, wherein the method comprises:

    receiving, by a third network function, a second request, wherein the second request is used to request the third network function to derive a key of a first network function, the key of the first network function is used for determining a security key used for establishing a security connection between a terminal and the first network function, the first network function is a network function other than a second network function in a network, and the second network function is used for access management of the terminal;
    obtaining, by the third network function, a first key of the first network function based on the second request; and
    sending, by the third network function, a first response, wherein the first response carries the first key, and the first response is a response message for the second request.

12. The method according to claim 11, wherein receiving, by the third network function, the second request comprises:

    receiving, by the third network function, the second request from the second network function; and
    sending, by the third network function, the first response comprises:
    sending, by the third network function, the first response to the second network function.

13. The method according to claim 11, wherein receiving, by the third network function, the second request comprises:

    receiving, by the third network function, the second request from the first network function; and
    sending, by the third network function, the first response comprises:
    sending, by the third network function, the first response to the first network function.

14. The method according to any one of claims 11 to 13, wherein obtaining, by the third network function, the first key of the first network function based on the second request comprises:

determining, by the third network function, the first key based on a second key, wherein the second key is a key of the third network function, and the key of the third network function is used for determining the key of the first network function.

15. The method according to claim 14, wherein determining, by the third network function, the first key based on the second key comprises:
determining, by the third network function, the first key based on the second key and first information, wherein the first information is at least one of the following: information about the terminal, information about the first request, information about the first network function, an identifier of the network, and a security parameter of the network.

16. A security key determining method, wherein the method comprises:

receiving, by a terminal, a first message from a first network function, wherein the first message comprises information indicating a key of the first network function, the first network function is a network function other than a second network function in a network, and the second network function is used for access management of the terminal; and
sending, by the terminal, a second message to the first network function, wherein the second message indicates whether the terminal determines a security key used for establishing a security connection between the terminal and the first network function.

17. The method according to claim 16, wherein the first message further comprises information indicating an encryption algorithm, the encryption algorithm is an algorithm used by the terminal for encryption, and the method further comprises:
determining, by the terminal, the security key based on the information about the key of the first network function and the information indicating the encryption algorithm.

18. The method according to claim 16 or 17, wherein before receiving, by the terminal, the first message from the first network function, the method further comprises:
sending, by the terminal, a first request to the second network function, wherein the first request is used by the terminal to request establishment of a service with the first network function, or the first request is used by the terminal to request access to the network.

19. A communication apparatus, wherein the apparatus comprises:

a transceiver module, configured to receive a first request, wherein the first request is used by a terminal to request establishment of a service with the first network function, or the first request is used by the terminal to request access to a network, the first network function is a network function other than a second network function in the network, and the second network function is used for access management of the terminal; and
a processing module, configured to obtain a first key of the first network function based on the first request, wherein
the processing module is further configured to determine a security key based on the first key, wherein the security key is used for establishing a security connection between the terminal and the first network function.

20. The apparatus according to claim 19, wherein the processing module is specifically configured to generate a second request based on the first request; and the transceiver module is further configured to: send the second request to a third network function, wherein the third network function is configured to determine a key of the first network function, and the second request is used to request the third network function to derive the key of the first network function; and receive a first response from the third network function, wherein the first response carries the first key, and the first response is a response message for the second request.

21. The apparatus according to claim 19, wherein the processing module is specifically configured to: obtain a second key based on the first request, wherein the second key is a key of a third network function, and the key of the third network function is used for determining a key of the first network function; and determine the first key based on the second key.

22. The apparatus according to claim 21, wherein the processing module is specifically configured to determine the first key based on the second key and first information, wherein the first information is at least one of the following: information about the terminal, information about the first request, information about the first network function, an identifier of the network, and a security parameter of the network.

23. The apparatus according to any one of claims 19 to 22, wherein the processing module is specifically configured to: determine a third key of the first network function based on the first key and the information about the first request; and determine the security key based on the third key.

24. The apparatus according to any one of claims 19 to 23, wherein the transceiver module is further configured to send a first message to the terminal, wherein the first message comprises information indicating the key of the first network function.

25. A communication apparatus, wherein the apparatus comprises:

a transceiver module, configured to receive a first request, wherein the first request is used by a terminal to request establishment of a service with a first network function, or the first request is used by the terminal to request access to a network, the first network function is a network function other than the second network function in the network, and the second network function is used for access management of the terminal; and
a processing module, configured to obtain a first key of the first network function based on the first request, wherein the first key is used for determining a security key used for establishing a security connection between the terminal and the first network function, wherein
the transceiver module is further configured to send the first key to the first network function.

26. The apparatus according to claim 25, wherein the processing module is specifically configured to generate a second request based on the first request; and the transceiver module is further configured to: send the second request to a third network function, wherein the third network function is configured to determine a key of the first network function, and the second request is used to request the third network function to derive the key of the first network function; and receive a first response from the third network function, wherein the first response carries the first key, and the first response is a response message for the second request.

27. The apparatus according to claim 25, wherein the processing module is specifically configured to determine the first key based on a key of the second network function.

28. The apparatus according to claim 27, wherein the processing module is specifically configured to determine the first key based on a key of the second network function and first information, wherein the first information is at least one of the following: information about the terminal, information about the first request, information about the first network function, an identifier of the network, and a security parameter of the network.

29. A communication apparatus, wherein the apparatus comprises:

a transceiver module, configured to receive a second request, wherein the second request is used to request the third network function to derive a key of a first network function, the key of the first network function is used for determining a security key used for establishing a security connection between a terminal and the first network function, the first network function is a network function other than a second network function in a network, and the second network function is used for access management of the terminal; and
a processing module, configured to obtain a first key of the first network function based on the second request, wherein
the transceiver module is further configured to send a first response, wherein the first response carries the first key, and the first response is a response message for the second request.

30. The apparatus according to claim 29, wherein the transceiver module is specifically configured to: receive the second request from the second network function; and send the first response to the second network function.

31. The apparatus according to claim 29, wherein the transceiver module is specifically configured to: receive the second request from the first network function; and send the first response to the first network function.

32. The apparatus according to any one of claims 29 to 31, wherein the processing module is specifically configured to determine the first key based on a second key, wherein the second key is a key of the third network function, and the key of the third network function is used for determining the key of the first network function.

33. The apparatus according to claim 32, wherein the processing module is specifically configured to determine the first key based on the second key and first information, wherein the first information is at least one of the following:

information about the terminal, information about the first request, information about the first network function, an identifier of the network, and a security parameter of the network.

34. A communication apparatus, wherein the apparatus comprises:

a transceiver module, configured to receive a first message from a first network function, wherein the first message comprises information indicating a key of the first network function, the first network function is a network function other than a second network function in a network, and the second network function is used for access management of a terminal; and

a processing module, configured to generate a second message, wherein the second message indicates whether the terminal determines a security key used for establishing a security connection between the terminal and the first network function, wherein

the transceiver module is further configured to send a second message to the first network function.

35. The apparatus according to claim 34, wherein the first message further comprises information indicating an encryption algorithm, the encryption algorithm is an algorithm used by the terminal for encryption, and the processing module is further configured to determine the security key based on the information about the key of the first network function and the information indicating the encryption algorithm.

36. The apparatus according to claim 34 or 35, wherein before receiving the first message from the first network function, the transceiver module is further configured to send a first request to the second network function, wherein the first request is used by the terminal to request establishment of a service with the first network function, or the first request is used by the terminal to request access to the network.

37. A communication apparatus, comprising a processor and a communication interface, wherein the processor is configured to execute computer instructions, and the communication interface is configured to perform communication, so that the method according to any one of claims 1 to 6 is implemented, or the method according to any one of claims 7 to 10 is implemented, or the method according to any one of claims 11 to 15 is implemented, or the method according to any one of claims 16 to 18 is implemented.

38. A communication apparatus, comprising a memory and a processor, wherein the memory is configured to store computer instructions, and the processor is configured to execute the computer instructions, so that the method according to any one of claims 1 to 6 is implemented, or the method according to any one of claims 7 to 10 is implemented, or the method according to any one of claims 11 to 15 is implemented, or the method according to any one of claims 16 to 18 is implemented.

39. A communication system, wherein the communication system comprises at least one of the following: a first network function configured to perform the method according to any one of claims 1 to 6, a second network function configured to perform the method according to any one of claims 7 to 10, a third network function configured to perform the method according to any one of claims 11 to 15, and a terminal configured to perform the method according to any one of claims 16 to 18.

40. A communication chip, wherein the chip stores instructions, and when the chip runs on a communication device, the method according to any one of claims 1 to 6 is implemented, or the method according to any one of claims 7 to 10 is implemented, or the method according to any one of claims 11 to 15 is implemented, or the method according to any one of claims 16 to 18 is implemented.

41. A computer-readable storage medium, wherein the computer-readable storage medium comprises a computer program or instructions, and when the computer program or the instructions are run on a computer, the computer is enabled to perform the method according to any one of claims 1 to 6, or the method according to any one of claims 7 to 10, or the method according to any one of claims 11 to 15, or the method according to any one of claims 16 to 18.

42. A computer program product, wherein the computer program product comprises a computer program or instructions, and when the computer program or the instructions are run on a communication apparatus, the method according to any one of claims 1 to 6 is performed, or the method according to any one of claims 7 to 10 is performed, or the method according to any one of claims 11 to 15 is performed, or the method according to any one of claims 16 to 18 is performed.

FIG. 1

FIG. 2

Network side                                                                    Terminal side

| UDM/ARPF | K | USIM |

CK, IK

| UDM/ARPF | | ME |
| 5G AKA | | EAP-AKA' |

| $K_{AUSF}$ | | CK', IK' |

| AUSF | $K_{AUSF}$ | ME |

$K_{SEAF}$

| SEAF | | ME |

| AMF | $K_{AMF}$ | ME |

$K_{NASint}$    $K_{NASenc}$

$K_{N3IWF}$    $K_{gNB}$, NH

$K_{RRCint}$    $K_{RRCenc}$    $K_{UPint}$    $K_{UPenc}$

| N3IWF | ME | gNB | ME |

HPLMN

Serving
network

FIG. 3

| First network function | | Second network function |

Terminal

FIG. 4

FIG. 5

FIG. 6

| UE | AMF | NF | SEAF | AUSF |
|---|---|---|---|---|

S701: Service request

S702: Service request

S703: Key derivation request

S704: Derive $K_{AUSF} \rightarrow K_{SEAF} \rightarrow K_{NF}$

S705: $K_{NF}$

S706: NAS SMC message

S707: NAS SMC complete message

FIG. 7

| UE | AMF | NF |
|---|---|---|

S801: Service request

S802: Service request

S803: Obtain $K_{NF}$ based on $K_{AMF}$

S804: NAS SMC message

S805: NAS SMC complete message

FIG. 8

| UE | AM | MM | SEAF | AUSF |
|----|----|----|------|------|

S901: Access request

S902: Access request

S903: Key derivation request

S904: Derive $K_{AUSF} \rightarrow K_{SEAF} \rightarrow K_{MM}$

S905: $K_{MM}$

S906: NAS SMC message

S907: NAS SMC complete message

FIG. 9

| UE | AM | MM |
|----|----|----|

S1001: Access request

S1002: Access request

S1003: Obtain $K_{MM}$ based on $K_{AM}$

S1004: NAS SMC message

S1005: NAS SMC complete message

FIG. 10

```
┌──────────┐      ┌──────────────┐      ┌──────────────┐
│ Terminal │      │Second network│      │ First network│
│          │      │   function   │      │   function   │
└────┬─────┘      └──────┬───────┘      └──────┬───────┘
     │                   │                     │
  ┌──┴───────────────────┴──┐                  │
  │  S1101: First request    │                  │
  └──┬───────────────────┬──┘                  │
     │                   │                     │
     │      ┌────────────┴─────────────┐       │
     │      │S1102: Obtain a first key of│      │
     │      │the first network function  │      │
     │      │based on the first request  │      │
     │      └────────────┬─────────────┘       │
     │                   │   S1103: First key   │
     │                   ├────────────────────►│
     │                   │                     │
```

FIG. 11

```
┌────┐    ┌────┐      ┌────┐      ┌──────┐      ┌──────┐
│ UE │    │AMF │      │ NF │      │ SEAF │      │ AUSF │
└─┬──┘    └─┬──┘      └─┬──┘      └──┬───┘      └──┬───┘
  │ S1201:  │           │            │             │
  │ Service │           │            │             │
  │ request │           │            │             │
  ├────────►│           │            │             │
  │         │ S1202: Key │            │             │
  │         │ derivation │            │             │
  │         │ request    │            │             │
  │         ├───────────────────────►│             │
  │         │           │            │             │
  │         │           │  S1203: Derive K_AUSF →   │
  │         │           │  K_SEAF → K_NF            │
  │         │           │            │             │
  │         │  S1204: K_NF            │             │
  │         │◄───────────────────────┤             │
  │         │ S1205: Service          │             │
  │         │ request (K_NF)          │             │
  │         ├──────────►│            │             │
  │         │ S1206: NAS │            │             │
  │         │ SMC message│            │             │
  │◄────────┤           │            │             │
  │ S1207: NAS SMC       │            │             │
  │ complete message     │            │             │
  ├───────────────────►│            │             │
  │         │           │            │             │
```

FIG. 12

FIG. 13

FIG. 14

Communication apparatus 1500

1501

Processor

CPU 0

CPU 1

1504

Processor

CPU 0

CPU 1

1502

Memory

1503

Transceiver

FIG. 15

## INTERNATIONAL SEARCH REPORT

| International application No. |
| --- |
| **PCT/CN2023/100301** |

**A.    CLASSIFICATION OF SUBJECT MATTER**

H04W12/041(2021.01)i

According to International Patent Classification (IPC) or to both national classification and IPC

**B.    FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXTC, VEN, IEEE: 安全, 密钥, 派生, 衍生, 演算, 推演, 网络功能, 转发, 请求, 响应, 接入, 安全锚点功能, AMF, AUSF, SEAF, network function, key, deriv+, request, response, second, SMC, third, security, encrypt+

**C.    DOCUMENTS CONSIDERED TO BE RELEVANT**

| Category* | Citation of document, with indication, where appropriate, of the relevant passages | Relevant to claim No. |
| --- | --- | --- |
| X | CN 110167081 A (ZTE CORP.) 23 August 2019 (2019-08-23) description, paragraphs [0053]-[0163] | 1-42 |
| A | WO 2021254172 A1 (HUAWEI TECHNOLOGIES CO., LTD.) 23 December 2021 (2021-12-23) entire document | 1-42 |
| A | WO 2022071779 A1 (SAMSUNG ELECTRONICS CO., LTD.) 07 April 2022 (2022-04-07) entire document | 1-42 |
| A | WO 2023000189 A1 (ZTE CORP.) 26 January 2023 (2023-01-26) entire document | 1-42 |
| A | HUAWEI et al. "Living CR for 5WWC" *3GPP TSG-SA WG3 Meeting #98e, S3-200247,* 06 March 2020 (2020-03-06), entire document | 1-42 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **08 December 2023** | **15 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/100301**

| Patent document cited in search report | | | Publication date (day/month/year) | Patent family member(s) | | | Publication date (day/month/year) |
|---|---|---|---|---|---|---|---|
| CN | 110167081 | A | 23 August 2019 | WO | 2019157935 | A1 | 22 August 2019 |
| WO | 2021254172 | A1 | 23 December 2021 | EP | 4161113 | A1 | 05 April 2023 |
| | | | | CN | 113873492 | A | 31 December 2021 |
| WO | 2022071779 | A1 | 07 April 2022 | US | 2023370840 | A1 | 16 November 2023 |
| | | | | KR | 20230079179 | A | 05 June 2023 |
| | | | | IN | 202041042652 | A | 01 April 2022 |
| WO | 2023000189 | A1 | 26 January 2023 | EP | 4268489 | A1 | 01 November 2023 |

Form PCT/ISA/210 (patent family annex) (July 2022)